(19) Europäisches Patentamt
European Patent Office
Office européen des brevets

(11) **EP 2 844 394 B1**

(12) **EUROPÄISCHE PATENTSCHRIFT**

(45) Veröffentlichungstag und Bekanntmachung des Hinweises auf die Patenterteilung:
**06.02.2019   Patentblatt 2019/06**

(21) Anmeldenummer: **13723438.1**

(22) Anmeldetag: **26.04.2013**

(51) Int Cl.:
*B05B 7/00* *(2006.01)*       *B05B 12/02* *(2006.01)*
*B29C 44/38* *(2006.01)*      *B29C 44/42* *(2006.01)*
*B29C 44/60* *(2006.01)*      *C08J 9/00* *(2006.01)*
*F16L 59/02* *(2006.01)*      *F25D 23/06* *(2006.01)*

(86) Internationale Anmeldenummer:
**PCT/EP2013/058765**

(87) Internationale Veröffentlichungsnummer:
**WO 2013/164274 (07.11.2013 Gazette 2013/45)**

(54) **VERFAHREN ZUR HERSTELLUNG VON GESCHÄUMTEN FORMKÖRPERN**

METHOD FOR PRODUCING FOAMED MOLDED BODIES

PROCÉDÉ DE FABRICATION DE CORPS MOULÉS EN MOUSSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2012   EP 12166156**

(43) Veröffentlichungstag der Anmeldung:
**11.03.2015   Patentblatt 2015/11**

(73) Patentinhaber: **Covestro Deutschland AG**
**51373 Leverkusen (DE)**

(72) Erfinder:
• **ALBERS, Reinhard**
 **51375 Leverkusen (DE)**

• **WIRTZ, Hans-Guido**
 **51377 Leverkusen (DE)**
• **LOOF, Michael**
 **51371 Leverkusen (DE)**
• **PIELASCH, Andreas**
 **51427 Bergisch-Gladbach (DE)**

(74) Vertreter: **Levpat**
**c/o Covestro AG**
**Gebäude 4825**
**51365 Leverkusen (DE)**

(56) Entgegenhaltungen:
**EP-A1- 0 565 974      EP-A1- 2 366 525**
**EP-A2- 2 148 156      DE-A1- 19 917 787**

## Beschreibung

Die vorliegende Erfindung betrifft ein Verfahren zur Herstellung von geschäumten Formkörpern, umfassend die Schritte des Bereitstellens einer Form und des Einbringens eines schaumbildenden Reaktionsgemisches in die Form.

Derzeit werden mit Polyurethanschäumen zu dämmende Hohlräume entweder kontinuierlich, wie es für Metallpaneele oder Isolationsplatten der Fall ist, oder diskontinuierlich, beispielsweise bei Kühlgeräten, Rohren oder diskontinuierlichen Paneelen, gedämmt. Bei solchen Verfahren werden konstante Austragsmengen des Dämmungsmaterials verwendet, die je nach Anwendungsfall in bestimmten Grenzen liegen müssen, um den Polyurethanschaum-Strukturen, Reaktivitätsprofilen sowie Vermischungsanforderungen gerecht zu werden.

Ein Beispiel für ein konventionelles Verfahren zur Herstellung von Isolierungen für Kühlgeräte ist die Befüllung in Wannenlage, bei der das Gerät auf der Rückwand liegend entweder von der Kompressorstufe oder dem Top-Bereich befüllt wird. Ein weiteres Beispiel für ein weiterentwickeltes konventionelles Verfahren ist das "Top Flow"-Verfahren, bei dem in einer Form das Reaktionsgemisch von unten kommend eingetragen wird und sich so auf dem Boden der Form ausbreiten kann.

DE 10 2008 040 598 A1 offenbart ein Verfahren zum Ausschäumen eines Hohlkörpers, insbesondere eines Haushaltskältegerätegehäuses, mit den Schritten des Platzierens einer Einspritzdüse an einer Einlassöffnung des Hohlkörpers, Einspritzen eines Schaumbildners in den Hohlkörper mit Hilfe der Einspritzdüse und Expandierenlassen des eingespritzten Schaumbildners. Hierbei wird die Flugweite des Schaumbildners von der Einspritzdüse bis zu einem Auftreffpunkt an einer Innenwand des Hohlkörpers während des Einspritzvorgangs reduziert.

Eine Möglichkeit, um die Flugweite des Schaumbildners zu variieren, ist das Verstellen der Spritzrichtung der Einspritzdüse während des Einspritzvorgangs. Bevorzugt ist gemäß DE 10 2008 040 598 A1 allerdings, die Flugweite des Schaumbildners zu reduzieren, indem dessen Austrittsgeschwindigkeit an der Einspritzdüse und damit die Strahlenergie für das Schaummaterial reduziert wird. Dieses sei durch eine hinsichtlich ihres Öffnungsquerschnitts veränderbare Düse zu erreichen.

Nachteilig an dieser Vorgehensweise ist jedoch, dass eine spezielle Düse benötigt wird. Hierdurch werden an bestehenden Anlagen Umrüstkosten und Stillstandszeiten erzeugt.

Aus EP 2 366 525 A1 ist ein Verfahren bekannt, bei dem eine vorbestimmte Menge einer Polyurethanmischung in eine Form eingespritzt wird, wobei zu Beginn eine erste Förderrate und Einspritzgeschwindigkeit zum Einbringen in einer ersten Schusszone eingestellt wird, welche sich am weitesten von dem Einspritzpunkt entfernt befindet. Im Weiteren wird sowohl die Förderrate als auch die Einspritzgeschwindigkeit reduziert, so dass die Polyurethanmischung in eine oder mehrere sukzessive Schusszonen zwischen der am weitesten entfernten und einer finalen Zone in der Nähe des Einspritzpunktes bedeckt werden. Hierbei werden die abgemessenen Mengen zur Beschichtung der verschiedenen Zonen gleich gehalten und/oder verändert. Anspruch 3 zufolge kann während dieser Prozedur eine graduelle Reduktion der Injektionsfördermenge der Polyurethanmischung zwischen benachbarten Zonen erfolgen. Zur Steuerung des Ausschäumvorgangs wird die Verwendung einer Computersteuerung vorgeschlagen, welche durch einen Vergleich gemessener Fließraten mit Referenzdaten über ein Stellglied die Pumpenrotationsgeschwindigkeit der Förderpumpen in entsprechender Weise anpasst.

Bei dieser Vorgehensweise wird es zum Teil als nachteilig empfunden, dass es bei den bislang hierfür eingesetzten Polyurethansystemen zu einer unvollständigen Befüllung der Form nach dem Ausschäumen kommen kann. Es wurde dabei insbesondere festgestellt, dass sich größere Lufteinschlüsse, so genannte Lunker, in dem Schaum ausbilden können. Größere Lufteinschlüsse verschlechtern jedoch die Isolationswirkung, was speziell in neuerer Zeit problematisch ist, da die Nachfrage nach immer besseren Isolationen für Kühlschränke aufgrund des damit verbundenen geringeren Energieverbrauchs weiter zunimmt.

EP 2148156 A2 offenbart ein Verfahren zum Ausschäumen eines Hohlkörpers, bei dem ein Schaumbildner in den Hohlkörper für Kältegeräte mit Hilfe einer Einspritzdüse eingebracht wird und wobei die Austrittsgeschwindigkeit des Schaumbildners an der Einspritzdüse reduziert wird.

DE 19917787 A1 beschreibt ein Verfahren zur Herstellung von komprimierten Polyurethan- oder Polyisocyanurat-Hartschaumstoffen, wobei nach Ablauf von 80-200% der Abbindezeit auf 5-95% des Ausgangsvolumens des Schaumstoffes komprimiert wird. Die Abbindezeit von technisch einsetzbaren Polyurethanschäumen beträgt bei maschineller Vermischung üblicherweise 25 bis 100 Sekunden.

Die vorliegende Erfindung hat sich daher die Aufgabe gestellt, ein Verfahren zur Herstellung von geschäumten Formkörpern bereitzustellen, bei dem die zuvor genannten Nachteile im Stand der Technik überwunden werden. Insbesondere soll in dem auszuschäumenden Hohlkörper eine homogenere Schaumdichteverteilung erzielt und das Auftreten von Lunkern vermieden werden.

Die Aufgabe wird erfindungsgemäß gelöst durch ein Verfahren zur Herstellung von geschäumten Formkörpern, umfassend die Schritte:

A) Bereitstellen einer Form und

B) Einbringen eines schaumbildenden Reaktionsgemisches in die Form, wobei das schaumbildende Reaktionsgemisch unter variablem Injektionsdruck in die Form eingebracht wird, wobei das Verfahren dadurch gekennzeichnet ist, dass das schaumbildende Reaktionsgemisch eine experimentell ermittelte Abbindezeit bei 20°C von ≥ 15 s bis ≤ 50 s aufweist und der variable Injektionsdruck in Schritt B) im zeitlichen Verlauf reduziert wird und in Schritt B) die Austrittsgeschwindigkeit des eingebrachten schaumbildenden Reaktionsgemisches in einem Bereich von ≥1 m/s bis ≤ 5 m/s liegt.

Ansprüche 2 bis 12 und 13 bis 14 definieren die weitere Erfindung.

Der vorliegenden Erfindung liegt die Erkenntnis zugrunde, dass durch den Einsatz eines schaumbildenden Reaktionsgemisches mit der vorgenannten Abbindezeit ein lunkerfreies Ausschäumen von Körpern selbst bei komplexen Körpergeometrien ermöglicht. Der Grund hierfür liegt möglicherweise darin, dass die erfindungsgemäß eingesetzten Reaktionsgemische eine vergleichsweise kurze Abbindezeit besitzen, sodass diese bereits während des Befüllvorgangs der Form beginnen aufzuschäumen. Diese werden deshalb auch als "schnelle Systeme" bezeichnet. Derartige Systeme, sind beispielsweise in Form von 2-K Polyurethansystemen aus anderen Anwendungsbereichen grundsätzlich bekannt. Dabei kann die Abbindegeschwindigkeit beispielsweise durch die Reaktivität der eingesetzten Rohstoffe und/ oder Wahl der Katalysatoren in der Weise beeinflusst werden, dass die erfindungsgemäßen Abbindezeiten erreicht werden.

Die Form wird also schon teilweise während des Befüllens ausgeschäumt, so dass sich eine steigende Schaumfront von der Stelle beginnend ausbildet, an der das Reaktionsgemisch als erstes ausgebracht wurde. Erreicht der Schaum durch den Ausschäumvorgang die Decke der Form, wird die in der Form befindliche Luft beziehungsweise das Gasvolumen von der Schaumfront verdrängt, ohne dass es zu den vorgenannten Lufteinschlüssen kommen kann. Aufgrund dessen kann das erfindungsgemäße Verfahren auch unter Normaldruck durchgeführt werden, wenngleich auch Vakuumtechniken grundsätzlich verwendet werden können.

Zudem hat sich gezeigt, dass bei Verwendung solcher schnell abbindenden Systeme eine feinere Porenstruktur erhalten wird. Eine feinere Porenstruktur bewirkt bei ansonsten gleichem Schaummaterial eine Verbesserung der Isolationswirkung.

Die Abbindezeit ist im Rahmen dieser Erfindung folgendermaßen definiert: Die Abbindezeit wird experimentell dadurch ermittelt, dass die Reaktanden des Reaktionsgemischs mit Hilfe eines üblichen Laborrührers bei 1000 U/min bei 20°C miteinander vermischt werden und in das aufschäumende Reaktionsgemisch in kurzen Abständen ein dünner Holzstab eingetaucht wird. Die Zeit vom Vermischen der Komponenten bis zu dem Zeitpunkt, bei dem am Stab beim Herausziehen Fäden hängenbleiben, ist die Abbindezeit.

Hiervon zu unterscheiden ist die so genannte Maschinenabbindezeit, die die Abbindezeit des Reaktionsgemischs bei Verarbeitung auf einer entsprechenden Maschine angibt. Da hierbei die Einzelkomponenten mit einem hohen Druck vermischt und in die Form eingebracht werden, kommt es hierbei zu einer Erwärmung der Reaktanden beziehungsweise des Reaktionsgemischs, so dass die Maschinenabbindezeiten in der Regel niedriger sind als die vorgenannten im Labor bestimmten Abbindezeiten bei 20 °C. Als grober Richtwert kann angegeben werden, dass bei 150 bar Injektionsdruck der Einzelkomponenten, beispielsweise einer Polyurethanmischung, die im Labor bestimmte Abbindezeit bei 20°C mit einem Faktor von etwa 0,6 umzurechnen ist. Das heißt, dass bei diesem Beispiel eine Abbindezeit bei 20 °C einer Maschinenabbindezeit bei 150 bar von etwa 36 s entspricht.

Das erfindungsgemäße Verfahren eignet sich insbesondere für Hohlkörper, deren Geometrie besondere Anforderungen an das Fließverhalten der Reaktionssysteme stellt. Insbesondere gehören hierzu gestreckte Geometrien, Geometrien mit hohen Schlankheitsgraden, mit dünnen und engen Hohlkörperkammern sowie langen Distanzen vom Eintragsort des Reaktionsgemisches bis zum Fließwegende des auszufüllenden Hohlkörpers.

Die in Schritt (A) des erfindungsgemäßen Verfahrens bereitgestellte Form kann eine geschlossene oder eine offene Form aufweisen. "Offen" bedeutet hierbei, dass mindestens zwei Seitenwände vorhanden sind. Der erhaltene Schaum kann aus der Form entnommen werden oder für seine Endbestimmung in der Form verbleiben. Erfindungsgemäß besonders geeignet ist eine Form, mit der einstückige Isolierungen von Kühlgeräten hergestellt werden. Vorzugsweise wird die Form so angeordnet, dass in sie eingebrachtes Reaktionsgemisch sich auf ihrem Boden verteilen kann.

Das schaumbildende Reaktionsgemisch kann in Schritt (B) mittels einer üblichen Hochdruck-Mischanlage hergestellt und mittels eines Austragsrohres in die Form eingebracht werden. Die Mischanlage kann eine Mischkammer umfassen, der die einzelnen Komponenten des Reaktionsgemischs zugeführt werden. Die Zuführung zur Mischkammer erfolgt über an sich bekannte Düsen, über welche die Komponenten des Reaktionsgemischs erfindungsgemäß mit variablem Druck in die Mischkammer eingebracht werden. Eine weitere Möglichkeit der Realisierung eines variablen Drucks umfasst eine Drosseleinrichtung, mit welcher der Ablaufquerschnitt der Reaktionsmischung aus der Mischeinrichtung in Richtung der Form, wobei die Drosseleinrichtung auch einer zuvor erwähnten Mischkammer nachgeschaltet sein kann. Es können pro Form ein Austragsrohr oder aber auch mehrere Austragsrohre eingesetzt werden. Nach beendeter Schaumbildung härtet das Reaktionsgemisch aus.

Mit anderen Worten kann also die erfindungsgemäß vorgesehene Variation des Injektionsdrucks durch Veränderung des Injektionsdrucks der einzelnen Komponenten des Reaktionsgemisches in die Mischkammer und/ oder durch Veränderung des Ablaufquerschnitts, beispielsweise über eine Drosseleinrichtung realisiert werden.

Weiterhin wird im erfindungsgemäßen Verfahren das schaumbildende Reaktionsgemisch unter variablem Injektionsdruck in die Form eingebracht. Der Begriff "variabel" bedeutet, dass bei dem Einbringen des Reaktionsgemischs aktiv auf den Injektionsdruck Einfluss genommen wird, beispielsweise durch Veränderung des Düsendurchmessers, der Fördermenge oder des Förderdrucks, um nur einige Möglichkeiten zu nennen. Hiermit nicht gemeint sind lediglich technisch unvermeidliche Schwankungen bei einem ansonsten mit konstantem Druck durchgeführten Verfahren. Insbesondere können Veränderungen des Injektionsdrucks von mehr als $\pm$ 15% vorgesehen sein. Vorteilhaft an einem variablen Injektionsdruck ist, dass gerade bei gleichzeitiger Verwendung der erfindungsgemäß vorgesehenen schnell aushärtenden Reaktionssysteme ein zügiges und lunkerfreies Ausschäumen des Körpers ermöglicht wird.

In vorteilhafter Ausgestaltung des erfindungsgemäßen Verfahrens kann das schaumbildende Reaktionsgemisch in zeitlich veränderlicher Menge in die Form eingebracht werden. Dies bedeutet, dass der Massenfluss der Reaktionsmischung in die Form, welcher beispielsweise in Gramm pro Sekunde ausgedrückt werden kann, variabel ist. Die zeitliche Veränderung kann linear sein oder aber auch anderen Zeitgesetzen folgen. Dies hat gegenüber einer konstanten Injektionsmenge pro Zeiteinheit den Vorteil, dass bei letzterer das zum Polyurethanschaum reagierende Gemisch in einem vergleichsweise begrenzten Bereich aufgetragen wird, was jedoch gerade bei komplexen Geometrien des auszuschäumenden Hohlraums den Nachteil hat, dass sich eine ungünstigere Vorverteilung des Reaktionsgemisches einstellt und insofern keine homogene Schaumverteilung erzielt werden kann.

Bei einem zeitlich konstanten Eintragen des Reaktionsgemisches in die Form lässt sich, bildlich gesprochen, eine ovale Verteilung eines horizontal auf den Boden einer Form injizierten Reaktionsgemisches erhalten. Hingegen erhält man bei der vorgenannt bevorzugten zeitlichen Veränderung der Austragsmenge das Reaktionsgemisch in Form eines langgestreckten Streifens. Aufgrund dessen hat das expandierende Reaktionsgemisch kürzere Wege, um die Form auszufüllen. Die Verkürzung der Fließwege führt zu Materialeinsparungen und isotroperen beziehungsweise homogeneren Schaumstrukturen. Mit anderen Worten kann eine gleichmäßigere Rohdichteverteilung im fertigen Schaum erhalten werden. Es werden auch die Festigkeitseigenschaften des Schaums verbessert, da Scherverluste minimiert werden. Diese Verfahrensvariante ist insbesondere in Kombination mit den erfindungsgemäß vorgesehenen Schaumsystemen mit kurzer Abbindezeit von Vorteil, da diese Systeme wegen ihrer kurzen Abbindezeit auf möglichst kurze Fließwege angewiesen sind.

Dabei kann die zeitliche Änderung der Eintragsmenge und/ oder des Injektionsdrucks des schaumbildenden Reaktionsgemisches beispielsweise durch eine Veränderung der Leistung eines auf das Reaktionsgemisch einwirkenden Pumpenmotors erfolgen, wobei die Leistung des Pumpenmotors insbesondere durch Veränderung der Drehzahl des Motors mittels eines Frequenzumrichters vorgenommen wird. Auf einfache Weise kann dieses durch eine speicherprogrammierbaren Steuerung (SPS) des Motors oder der Motoren realisiert werden. Mit eingeschlossen ist selbstverständlich der Fall, dass bei mehreren zu fördernden Komponenten des schaumbildenden Reaktionsgemisches mehrere Motoren beeinflusst werden. Das Eintragsprofil kann für jede Form individuell eingestellt werden.

Vorzugsweise wird das schaumbildende Reaktionsgemisch aus der Vermischung mehrerer Komponenten in einem Mischkopf erhalten und unmittelbar danach in die Form eingebracht. Hierbei kann die Austrittsöffnung des Mischkopfs gleichzeitig das Austragsrohr darstellen, mit dem die Mischung in die Form eingebracht wird.

Für den Fall, dass das schaumbildende Reaktionsgemisch aus der Vermischung mehrerer Komponenten in einem Mischkopf erhalten wird und der Mischkopf eine oder mehrere Injektionsdüsen umfasst, ist der variable Injektionsdruck im erfindungsgemäßen Verfahren der an den Injektionsdüsen anliegende Druck.

Die Vermischung von flüssigen Reaktionskomponenten erfolgt bei der Polyurethan-Verarbeitung in einem Mischkopf, wobei zwischen Hochdruck- und Niederdruckvermischung unterschieden werden kann. Beim Hochdruckmischverfahren, welches für das beschriebene Verfahren bevorzugt zur Anwendung kommt, wird die mittels Pumpen erzeugte Druckenergie der Reaktionskomponenten über Düsen in kinetische Energie umgewandelt. Durch Eindüsen der Komponenten in eine vergleichsweise kleine im Mischkopf liegende Mischkammer wird die kinetische Energie räumlich konzentriert und zur Vermischung der Reaktionskomponenten genutzt. Übliche Injektionsdrücke betragen 90 bis 200 bar, vorzugsweise 120 bis 170 bar, wodurch je nach Materialdichte Strömungsgeschwindigkeiten von 140 bis 180 m/s realisiert werden. Hierbei kann vorgesehen sein, dass der Injektionsdruck der beiden Reaktionskomponenten gleich oder verschieden ist. So kann bei Verwendung gleicher Düsen für die Polyol- und die Isocyanatkomponente einer Polyurethanmischung das gewünschte Mischungsverhältnis der beiden Komponenten zueinander wie gewünscht eingestellt werden. Als Beispiel kann der Injektionsdruck der Isocyanatkomponente etwa 20 bar höher als der Injektionsdruck der Polyolkomponente eingestellt sein.

Im erfindungsgemäßen Verfahren können Mischköpfe oder Einspritzdüsen zum Eintragen des Reaktionsgemisches in die Form verwendet werden, deren Öffnungsquerschnitt hinsichtlich des Gemischaustrags veränderbar oder auch nicht veränderbar ist.

Vorzugsweise umfasst das schaumbildende Reaktionsgemisch eine Polyolkomponente und eine Polyisocyanatkomponente, so dass ein Polyurethanschaum erhalten wird. Der Schaum kann offenzellig oder geschlossenzellig sein. Es ist weiterhin günstig, wenn das Reaktionsgemisch eine geringe Anfangsviskosität, beispielsweise von $\geq$ 300

mPas bis ≤ 2000 mPas bei der während des Vermischens herrschenden Temperatur, aufweist.

In einer weiteren Ausführungsform des erfindungsgemäßen Verfahrens wird das schaumbildende Reaktionsgemisch aus der Reaktion einer ersten und einer zweiten Reaktionskomponente erhalten und die erste und zweite Reaktionskomponente werden jeweils mittels Düsen in eine Mischkammer eingebracht. Hierfür können im Prinzip sämtliche Arten von Düsen verwendet werden, mit denen ein variabler Injektionsdruck realisiert werden kann. Aus der Mischkammer heraus kann das Reaktionsgemisch dann in die Form eingebracht werden. Der Vorteil dieses Vorgehens liegt in einer gleichbleibenden Vermischungsqualität der beiden Komponenten. Wie bereits zuvor ausgeführt handelt es sich bei den beiden Komponenten insbesondere um ein Polyolsystem und ein Polyisocyanat.

In einer weiteren Ausführungsform des erfindungsgemäßen Verfahrens ist das schaumbildende Reaktionsgemisch derart ausgewählt, dass ein Polyurethan-Hartschaum erhalten wird. Mit eingeschlossen in den Begriff "Polyurethan-Hartschaum" sind Polyurethan/Polyisocyanurat-Hartschäume. Zur Herstellung von Urethan- und/oder Isocyanuratgruppen aufweisenden Hartschaumstoffen können insbesondere als Ausgangskomponenten verwendet werden:

a) Aliphatische, cycloaliphatische, araliphatische, aromatische und heterocyclische Polyisocyanate, bevorzugt Diphenylmethandiisocyanat (MDI) oder Polyphenylpolymethylenpolyisocyanate (polymeres MDI), Carbodiimidgruppen, Urethangruppen, Allophanatgruppen, Isocyanuratgruppen, Harnstoffgruppen oder Biuretgruppen aufweisende Polyisocyanate, besonders bevorzugt auf der Basis von Polyphenylpolymethylenpolyisocyanat und

b) Verbindungen mit mindestens zwei gegenüber Isocyanaten reaktiven Wasserstoffatomen mit einem Molekulargewicht im Bereich von 400 g/mol bis 10000 g/mol, zum Beispiel Aminogruppen, Thiolgruppen, Hydroxylgruppen oder Carboxylgruppen aufweisende Verbindungen. Bevorzugt sind hierbei auf Aminogruppen gestartete Polyethylenglykole mit primären Hydroxylgruppen.

Die Herstellung der Schaumstoffe kann unter Verwendung von üblichen Hilfs- und Zusatzstoffen wie Katalysatoren, Treibmitteln, Vernetzern, Flammschutzmitteln Schaumstabilisatoren, Fliessverbesserer und/oder Inhibitoren erfolgen.

Erfindungsgemäß weist das schaumbildende Reaktionsgemisch eine Abbindezeit bei 20 °C von ≥ 20 s bis ≤ 50 s auf. Die genannten Abbindezeiten haben den Vorteil, dass im Zusammenwirken mit dem erfindungsgemäßen Verfahren Formen schnell, vollständig und vor allem lunkerfrei befüllt werden können.

In einer weiteren Ausführungsform des erfindungsgemäßen Verfahrens beträgt die Zeitdauer, während der das schaumbildende Reaktionsgemisch in zeitlich veränderlicher Menge in die Form eingebracht wird, ≥ 1 s bis ≤ 20 s. Diese Zeitdauer kann auch ≥ 5 s bis ≤ 10 s betragen.

Bei dem erfindungsgemäßen Verfahren ist es weiter bevorzugt, dass das Verhältnis der Zeitdauer, während der das schaumbildende Reaktionsgemisch in zeitlich veränderlicher Menge in die Form eingebracht wird, zu der Liegezeit des schaumbildenden Reaktionsgemischs 0,1 bis 10 beträgt, insbesondere 0,5 bis 5. Hierdurch kann die Geschwindigkeit der Einbringung an die Liegezeit des Reaktionsgemischs angepasst werden, wodurch insbesondere eine Verfahrensvariante, bei der die Einspritzweite der Reaktionsmischung in die Form über die Dauer der Einbringung reduziert wird, verhindert, dass das Reaktionsgemisch in oder durch den bereits aufschäumenden Schaum geschossen wird, was sich nachteilig auf die Schaumstruktur auswirken könnte. Dies gilt beispielsweise dann, wenn der Injektionsdruck über die Dauer des Einbringungsvorgangs des Reaktionsgemischs reduziert wird.

Die Liegezeit beschreibt die Zeit, die vom Vermischen der Komponenten bis zu dem Zeitpunkt, bei dem das Ancremen des Reaktionsgemischs durch eine Farbverschiebung hin zu einer helleren Verfärbung und ein beginnendes Aufschäumen visuell erkennbar wird, vergeht. Sie wird visuell bestimmt. Im erfindungsgemäßen Verfahren beträgt in Schritt B) die Austrittsgeschwindigkeit des eingebrachten schaumbildenden Reaktionsgemisches in einem Bereich von ≥ 1 m/s bis ≤ 5 m/s.

Wenn das Reaktionsgemisch aus einem durch einen Auslaufreinigungskolben oder Stößel reinigbaren Mischkopf austritt, wird zweckmäßigerweise die Austrittsgeschwindigkeit aus dem Mischkopf hierbei an dem Stößel gemessen.

In einer weiteren, besonders bevorzugten Ausführungsform des erfindungsgemäßen Verfahrens nimmt die Austrittsgeschwindigkeit des eingebrachten schaumbildenden Reaktionsgemisches in Schritt B) im zeitlichen Verlauf ab. Mit anderen Worten wird dabei die auszuschäumende Form derart mit dem Reaktionsgemisch befüllt, dass das Reaktionsgemisch zunächst an die der Einfüllstelle gegenüberliegenden Position eingebracht und dann die Einspritzweite kontinuierlich reduziert wird. Diese Vorgehensweise empfiehlt sich bei langen, schlanken Geometrien der Form, wie sie beispielsweise bei Gehäusen für Dämmelemente von Kühlschränken anzutreffen ist. Ansonsten könnte es bei solchen Formen je nach Dauer des Befüllvorgangs bei besonders schnell abbindenden Reaktionsgemischen bei einer umgekehrten Befüllung dazu kommen, dass frisches Reaktionsgemisch durch bereits aufgeschäumtes Material geschossen wird, was der Schaumhomogenität abträglich ist. Auch ist ein abnehmender Eintrag angebracht, wenn das auszufüllende Volumen über die gesamte Bodenfläche der Form gleichmäßig verteilt ist.

In einer alternativen Ausführungsform des erfindungsgemäßen Verfahrens nimmt die Austrittsgeschwindigkeit des eingebrachten schaumbildenden Reaktionsgemisches in Schritt B) im zeitlichen Verlauf zu. Dieses ist speziell bei kurzen, gedrungenen Geometrien der Form vorteilhaft. In einer weiteren alternativen Ausführungsform des erfindungsgemäßen Verfahrens wird vor und/oder nach Schritt B) das schaumbildende Reaktionsgemisch in zeitlich konstanter Austrittsgeschwindigkeit in die Form eingebracht. Auf diese Weise lässt sich eine rampenförmige Mengenverteilung in der Form realisieren. Dieses ist bei großvolumigen Bereichen am Anfang und am Ende der Form vorteilhaft.

Bei dem erfindungsgemäßen Verfahren wird der Injektionsdruck in Schritt B) im zeitlichen Verlauf reduziert. insbesondere weitestgehend linear. Hierzu kann der Injektionsdruck insbesondere um wenigstens 10 bar/s reduziert werden, bevorzugt um wenigstens 15 bar/s, besonders bevorzugt wenigstens 20 oder gar wenigstens 25 bar/s. Diese Werte können ebenso bei steigendem Injektionsdruck verwendet werden. Auch andere Geschwindigkeiten sind denkbar und richten sich nach dem gewünschten Start- und Enddruck sowie der Dauer des Einspritzvorgangs. Jeweils für ein Reaktionsgemisch und eine bestimmte Form optimale Veränderungen des Injektionsdrucks können von einem Fachmann mit wenigen Versuchen ermittelt werden.

Ein geeigneter Startdruck ist beispielsweise 170 bar +/- 10 bar und ein geeigneter Enddruck beispielsweise 90 bar +/- 10 bar, wobei die vom Startdruck zum Enddruck verstreichende Zeit bevorzugt 5s oder weniger beträgt, insbesondere 3 s oder weniger. Die vorgenannten Werte für geeignete Start- und Enddruckkönnen auch bei steigendem Injektionsdruck, dann jedoch in umgekehrter Reihenfolge angesteuert werden. In diesem Fall können die vorgenannten zeitlichen Veränderungen des Injektionsdrucks in gleicher Weise zur Anwendung kommen.

In weiterer Ausgestaltung des erfindungsgemäßen Verfahrens wird das schaumbildende Reaktionsgemisch in Schritt B) in horizontaler Richtung in die Form eingebracht, vorzugsweise etwa 2 mm bis 50 mm oberhalb des Bodens. Beim horizontalen Auftragen kann sich das Reaktionsgemisch besonders gleichmäßig verteilen.

In einer weiteren Ausführungsform des erfindungsgemäßen Verfahrens umfasst die Form im Querschnitt gesehen ein horizontal angeordnetes Bodenvolumen sowie vertikal angeordnete, mit dem Bodenvolumen kommunizierende Volumina. Auf diese Weise lassen sich einstückige Dämmelemente für Kühlschränke herstellen. Beim Befüllen der Form mit dem Reaktionsgemisch verteilt sich dieses zunächst im Bodenvolumen und steigt dann während der Schaumbildung in die vertikalen Volumina auf. Diese Volumina oder Kanäle können ebenfalls eine über die gesamte Länge oder Breite der Form reichende Dimensionierung verfügen. Beispielhafte Dicken liegen zwischen 20 mm und 200 mm, zudem sind eingelegte Leitungen, Kanäle, Paneele und Rohre denkbar, die die Querschnittsdicken verändern können.

In Weiterbildung des erfindungsgemäßen Verfahrens umfasst die Form eine äußere Rohrleitung und eine darin angeordnete innere Rohrleitung und das schaumbildende Reaktionsgemisch wird zwischen innerer und äußerer Rohrleitung eingebracht. Hierdurch lassen sich gedämmte Rohrleitungen erhalten. Die innere Rohrleitung transportiert dabei das gewünschte Material und die äußere Rohrleitung dient als schützende Hülle.

In einer weiteren Ausführungsform des erfindungsgemäßen Verfahrens umfasst die Form zwei voneinander beabstandete Flächenelemente und das schaumbildende Reaktionsgemisch wird zwischen diese Flächenelemente eingebracht. Auf diese Weise können diskontinuierliche Paneele, wie sie zu Isolier- und Brandschutzzwecken benötigt werden, herstellen. Vorzugsweise sind ein oder beide Flächenelemente aus Metall.

Nach einer bevorzugten Ausführungsform des erfindungsgemäßen Verfahrens wird das schaumbildende Reaktionsgemisch über einen Mischkopf mit einer Mischkammer eingebracht und es wird weiterhin der Abflussquerschnitt der Mischkammer während des Einbringens verändert. Dieses kann mittels geeigneter Modifizierungen des Mischkopfs und Einbinden in ein Steuerungsprogramm realisiert werden. So kann beispielsweise durch einen mittels eines Stellglieds in dem Auslaufrohr verschiebbaren Kolben der Abfluss der Mischkammer teilweise verschlossen werden. Diese Anordnung dient dann als Drosseleinrichtung. Auf diese Weise kann die Vermischungsqualität des Reaktionsgemisches bei veränderten Massenströmen gleichbleibend hoch gehalten werden. Zudem kann auf diese Weise der Druck des in die Form ausströmenden Reaktionsgemischs variiert werden. Bei Einsatz von Mischköpfen mit mehr als zwei Düsen pro Komponente besteht durch Düsenkombinationen in vielen Fällen die Möglichkeit, die Austragsbandbreite über die gesamte Mischkopfaustragsleistung auf 1:6 beziehungsweise 6:1 zu variieren.

Nach einer weiteren Ausgestaltung des erfindungsgemäßen Verfahrens umfasst das schaumbildende Reaktionsgemisch eine Emulsion oder besteht daraus, wobei die Emulsion die folgenden Bestandteile enthält:

(I) eine Isocyanat-reaktive Zusammensetzung **A**, enthaltend eine Polyolmischung **A1** aus wenigstens drei Polyolen **A1a**, **A1b** und **Ale** als kontinuierliche Phase

und

(II) wenigstens ein physikalisches Treibmittel **T** als disperse Phase,

wobei gilt:

(i) **A1a** ist ein Polyetherpolyol mit einer Hydroxylzahl von 15 mg KOH/g bis 550 mg KOHlg und mit einer Funktionalität von 1,5 bis 6,0, erhalten durch Addition eines Epoxids an eine oder mehrere Starterverbindung(en) ausgewählt aus der Gruppe bestehend aus Kohlenhydraten und di- oder höherfunktionellen Alkoholen;

(ii) **A1b** ist ein Polyetherpolyol mit einer Hydroxylzahl von 100 mg KOH/g bis 550 mg KOH/g und mit einer Funktionalität von 1,5 bis 5,0, erhalten durch Addition eines Epoxids an ein aromatisches Amin;

(iii) **A1e** ist ein Polyesterpolyetherpolyol mit einer Hydroxylzahl von 100 mg KOH/g bis 450 mg KOH/g und mit einer Funktionalität von 1,5 bis 3,5, erhalten durch Addition eines Epoxids an das Veresterungsprodukt eines aromatischen Dicarbonsäurederivats und eines di- oder höherfunktionellen Alkohols.

Der Einsatz einer solchen Emulsion im Rahmen des erfindungsgemäßen Verfahrens ist besonders vorteilhaft, weil diese Emulsionen sehr schnell abbinden, das heißt bei 20 °C in einem Intervall von 20 bis 60 s und sich deshalb besonders gut für das erfindungsgemäße Verfahren mit variablem Injektionsdruck eignen. Die Kombination aus dynamischer Einbringung des schaumbildenden Reaktionsgemischs in Form dieser Emulsion, das heißt bei variablem Injektionsdruck, führt zu ausgehärteten Schäumen mit sehr gleichmäßigen und guten Isolationseigenschaften auch bei unregelmäßig geformten Formkörpern wie einem Kühlschrankgehäuse, einem Gefrierschrankgehäuse oder dem Gehäuse einer Kühl-Gefrierkombination. Insbesondere sind die erhaltenen Formkörper auch bei den vorgenannten Anwendungsfällen weitestgehend frei von Lunkern, was sich ebenfalls positiv auf die Isolationsleistung auswirkt.

Die Verwendung des Worts *"ein"* im Zusammenhang mit erfindungsgemäßen Komponenten wie bspw. bestimmten Polyolen ist im Sinne dieser Anmeldung nicht als Zahlwort zu verstehen. Ausdrücke wie "ein Polyol" o. Ä. bedeuten daher nur dann "genau ein (=1) Polyol", wenn dies ausdrücklich gesagt wird. Es ist beispielsweise denkbar, dass zwei Polyole des Typs **A1a** vorliegen.

Unter einer *"Emulsion"* wird im Rahmen der vorliegenden Erfindung ein fein verteiltes Gemisch zweier Flüssigkeiten verstanden, in dem eine Flüssigkeit (nämlich das physikalische Treibmittel T) in der anderen Flüssigkeit (nämlich der Polyolmischung **A1**) in Form feiner Tröpfchen dispergiert ist mit einer mittleren Tröpfchengröße von $\geq 0,1\ \mu m$ bis $\leq 20\ \mu m$, wobei die Tröpfchengröße mittels eines optischen Mikroskops im Hellfeld Transmissions-Modus bestimmt wird. Eine solche Emulsion ist sowohl verschieden von einer echten Lösung als auch von einer Mikroemulsion. Mikroemulsionen besitzen eine derart fein verteilte disperse Phase, dass keine Lichtbrechung mehr erfolgt. Solche Mikroemulsionen erscheinen daher klar und transparent im Bereich des sichtbaren Lichts, wohingegen Emulsionen im Sinne der vorliegenden Erfindung trüb erscheinen und eine starke Lichtbrechung aufweisen. Auch sind Mikroemulsionen *nur* mithilfe von Emulgierhilfsmitteln herstellbar, während der Einsatz von Emulgierhilfsmitteln bei der Herstellung der erfindungsgemäßen Emulsionen zwar nicht grundsätzlich ausgeschlossen, aber auch nicht zwingend erforderlich und daher nicht bevorzugt ist. Gemäß der vorliegenden Erfindung beträgt die Tröpfchengröße des Treibmittels **T** vorzugsweise $\geq 0,1\ \mu m$ bis $\leq 15\ \mu m$, weiter bevorzugt $\geq 1\ \mu m$ bis $\leq 15\ \mu m$. Die Tröpfchengröße wird dabei mittels eines optischen Mikroskops im Hellfeld Transmissions-Modus bestimmt. Geeignete Schichtdicken für diese optische Bestimmung der Probe betragen $20\ \mu m$ bis $40\ \mu m$.

Unter *"physikalischen Treibmitteln"* werden im Rahmen der vorliegenden Erfindung solche Verbindungen verstanden, die aufgrund ihrer physikalischen Eigenschaften leicht flüchtig sind und nicht mit der Isocyanatkomponente reagieren.

Die *"Hydroxylzahl"* gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240 in der Fassung vom Dezember 1971.

*"Funktionalität"* bezeichnet im Rahmen der vorliegenden Erfindung die theoretische, aus den bekannten Einsatzstoffen und deren Mengenverhältnissen berechnete Funktionalität.

Ein weiterer Gegenstand der vorliegenden Erfindung ist ein Verfahren zur Herstellung eines Polyurethanhaltigen Polymers **C**, bei dem eine Isocyanatkomponente **B** mit einer erfindungsgemäßen Emulsion umgesetzt wird.

Unter einem *"Polyurethan-haltigen Polymer C"* werden dabei sowohl solche Polymere verstanden, die ausschließlich Polyurethangruppen (PUR-Gruppen) enthalten, als auch solche Polymere, die zusätzlich Harnstoff- und/oder Polyisocyanuratgruppen (PIR-Gruppen) enthalten.

Weitere Gegenstände der vorliegenden Erfindung betreffen die so erhältlichen Polyurethanpolymere **C** sowie deren Verwendung zu Isolationszwecken.

Überraschenderweise wurde gefunden, dass durch die erfindungsgemäße Kombination der Polyole **A1a**, **A1b** und **A1c** die Gesamtviskosität der Isocyanat-reaktiven Zusammensetzung, und damit auch die Gesamtviskosität der Emulsion, gegenüber solchen Isocyanat-reaktiven Zusammensetzungen (Polyolmischungen) des Standes der Technik, die mit dem physikalischen Treibmittel eine Lösung ausbilden, sogar erniedrigt werden kann. Weiterhin wurde gefunden, dass sich die Stabilität der erfindungsgemäßen Emulsionen durch die Optimierung bestimmter Paramater (wie des Gehalts an Oxyethylengruppen der eingesetzten Polyole) deutlich erhöhen lässt. Ferner lassen sich durch die richtige Kombination von optimierten Polyolemulsionen mit geeigneten NCO-terminierten Präpolymeren die erzielten Wärmeleitzahlen verbessern. Schließlich wurde überraschenderweise gefunden, dass sich die Wärmeleitzahl von mittels der erfindungsgemäßen Kombination der Polyole A1a, A1b und A1c hergestellten Polymeren C dadurch weiterhin verbessern lässt, dass diese mittels des erfindungsgemäßen Verfahrens mit variablem Austrag hergestellt werden.

Die Herstellung der erfindungsgemäß einsetzbaren Polyole **A1a** bis **A1c** (sowie ggf. weiterer Polyole; siehe unten) ist dem Fachmann grundsätzlich bekannt und wurde bereits vielfach beschrieben. Polyesterpolyole werden durch Polykondensation von Dicarbonsäureäquivalenten und niedermolekularen Polyolen erhalten. Polyetherpolyole werden durch Polyaddition (anionisch oder kationisch) von Epoxiden an geeignete Starterverbindungen erhalten. Die Addition von Epoxiden an Polyesterpolyole führt zu den erfindungsgemäßen Polyesterpolyetherpoylolen. Erforderlichenfalls werden die Polymerisierungsreaktionen in Gegenwart geeigneter, dem Fachmann bekannter Katalysatoren durchgeführt.

In bevorzugten Ausführungsformen wird das Polyetherpolyol **A1a** auf Saccharose, Mischungen aus Saccharose und Propylenglykol, Mischungen aus Saccharose und Ethylenglykol, Mischungen aus Saccharose, Propylenglykol und Ethylenglykol, Sorbit oder Mischungen aus Sorbit und Glyzerin gestartet. Bevorzugte Epoxide sind 1,2-Butylenoxid, 2,3-Butylenoxid, Ethlyenoxid und Propylenoxid, einzeln oder in Mischungen. Besonders bevorzugt sind Ethlyenoxid und Propylenoxid, die einzeln oder beide zusammen eingesetzt werden können, wobei im letzteren Fall sowohl eine statistische Verteilung der vom Ethylenoxid- und Propylenoxid jeweils abgeleiteten Oxyalkylen-Einheiten als auch die gezielte Herstellung von Blockcopolymeren einer bestimmten Struktur denkbar ist. Besonders bevorzugt als Starter sind Gemische aus Saccharose, Propylenglykol und Ethylenglykol. Besonders bevorzugt wird ausschließlich Propylenoxid als Epoxid eingesetzt. Besonders bevorzugt beträgt die Hydroxylzahl von **A1a** 100 mg KOH/g bis 450 mg KOH/g und die Funktionalität 2,5 bis 5.

In bevorzugten Ausführungsformen wird das Polyetherpolyol **A1b** auf ortho-, meta- oder para-Toluylendiamin oder einem Gemisch der isomeren Toluylendiamine gestartet. Besonders bevorzugt wird als Starter ortho-Toluylendiamin eingesetzt. Dieses kann als Gemisch der 2,3- und 3,4-Isomeren vorliegen. Grundsätzlich ist aber auch der Einsatz anderer aromatischer Amine denkbar, wie bspw. Benzoldiamin (alle Isomere) oder Methylendiphenyldiamin (alle Isomere). Bevorzugte Epoxide sind 1,2-Butylenoxid, 2,3-Butylenoxid, Ethlyenoxid und Propylenoxid, einzeln oder in Mischungen. Besonders bevorzugt sind Ethylenoxid und Propylenoxid, die einzeln oder beide zusammen eingesetzt werden können, wobei im letzteren Fall sowohl eine statistische Verteilung der vom Ethylenoxid- und Propylenoxid jeweils abgeleiteten Oxyalkylen-Einheiten als auch die gezielte Herstellung von Blockcopolymeren einer bestimmten Struktur denkbar ist. Besonders bevorzugt wird Propylenoxid allein oder im Gemisch mit Ethylenoxid eingesetzt. Im letzteren Fall beträgt das Massenverhältnis von Proplyenoxid zu Ethylenoxid 0,25 : 1 bis 4 : 1, ganz besonders bevorzugt 0,5 : 1 bis 2 : 1. Im Fall von Blockcopolymeren werden diese bevorzugt mit Propylenoxid terminiert.

In bevorzugten Ausführungsformen ist das in der Herstellung des Polyols **A1c** eingesetzte aromatische Dicarbonsäurederivat ein Phthalsäurederivat, besonders bevorzugt Phthalsäureanhydrid.

Bevorzugte in der Herstellung des Polyols **A1c** eingesetzte di- oder höherfunktionelle Alkohole sind Ethylenglykol und Diethylenglykol einschließlich deren höherer Homologe, 1,2-Propandiol, Dipropylenglykol und dessen höhere Homologe, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol einschließlich deren höherer Homologe, 2-Methylpropandiol-1,3, Neopentylglykol, 3-Methylpentandiol-1,5, Glycerin, Pentaerythrit, 1,1,1-Trimethylolpropan und Kohlenhydrate mit 5 bis 12 Kohlenstoffatomen (wie bspw. Isosorbid). Ganz besonders bevorzugt sind Ethylenglykol und Diethylenglykol.

Bevorzugte in der Herstellung des Polyols **A1c** eingesetzte Epoxide sind Ethylenoxid und Propylenoxid. Diese werden in einer solchen Menge eingesetzt, dass der Gehalt an Oxyethylengruppen 5 Massen-% bis 50 Massen-%, bevorzugt 10 Massen-% bis 40 Massen-%, besonders bevorzugt 15 Massen-% bis 30 Massen-%, bezogen auf die Gesamtmasse des Polyols **A1c**, beträgt.

In bestimmten Ausführungsformen kann die Polyolmischung **A1** noch weitere Polyole enthalten. So kann noch (iv) ein kurzkettiges auf einem aliphatischen Amin oder einem mehrwertigen Alkohol gestartetes Polyetherpolyol **A1d** mit einer Hydroxylzahl von 500 mg KOH/g bis 1000 mg KOH/g, bevorzugt von 600 mg KOH/g bis 950 mg KOH/g, besonders bevorzugt von 700 mg KOH/g bis 900 mg KOH/g und mit einer Funktionalität von 1,5 bis 5,0, bevorzugt von 2,0 bis 4,5, besonders bevorzugt von 2,5 bis 4,0, anwesend sein. Besonders bevorzugt wird **A1d** durch Addition von Epoxiden an Ethylendiamin oder Trimethylolpropan erhalten. Bevorzugte Epoxide sind Ethylenoxid und Propylenoxid, besonders bevorzugt ist Propylenoxid.

Des Weiteren kann die Polyolmischung **A1** auch (v) einen di- bis tetrafunktionellen aminischen oder alkoholischen Kettenverlängerer oder Vernetzer **A1e** enthalten. **A1e** ist bevorzugt ausgewählt aus Glyzerin, Butandiol, Ethylenglykol, Diethylenglykol, Propylenglykol, Ethylendiamin, Ethanolamin, Triethanolamin, Trimethylolpropan und Pentaerythrit.

In der Polyolmischung **A1** können auch Polyethercarbonatpolyole **A1f**, wie sie beispielsweise durch katalytische Umsetzung von Epoxiden und Kohlendioxid in Anwesenheit von H-funktionellen Startersubstanzen erhältlich sind (siehe z. B. EP 2 046 861 A1), zusätzlich eingesetzt werden. Diese Polyethercarbonatpolyole haben im Allgemeinen eine Funktionalität von größer als oder gleich 1,0, bevorzugt von 2,0 bis 8,0, besonders bevorzugt von 2,0 bis 7,0 und ganz besonders bevorzugt von 2,0 bis 6,0. Die zahlengemittelte Molmasse beträgt bevorzugt 400 g/mol bis 10000 g/mol und besonders bevorzugt 500 g/mol bis 6000 g/mol.

Die zahlengemittelte Molmasse $M_n$ wird im Rahmen dieser Erfindung bestimmt durch Gelpermeationschromatographie nach DIN 55672-1 vom August 2007.

Das physikalische Treibmittel **T** unterliegt keinen grundsätzlichen Einschränkungen, solange es nicht in der Polyolmischung **A1** unter den herrschenden Randbedingungen (Temperatur, Druck) löslich ist (denn dann wäre keine Emulsion herstellbar). Bevorzugt sind die erfindungsgemäß einzusetzenden physikalischen Treibmittel ausgewählt aus Kohlenwasserstoffen (z. B. n-Pentan, iso-Pentan, cycloPentan, Butan, Isobutan), Ethern (z. B. Methylal), halogenierten Ethern, perfluorierte Kohlenwasserstoffe mit 1 bis 8 Kohlenstoffatomen (z. B. Perfluorhexan), sowie deren Gemischen untereinander. In besonders bevorzugten Ausführungsformen wird als physikalisches Treibmittel **T** ein Pentanisomer oder ein Gemisch verschiedener Pentanisomeren eingesetzt. Außerordentlich besonders bevorzugt wird Cyclopentan als Treibmittel **T** eingesetzt.

In besonders bevorzugten Ausführungsformen enthält die erfindungsgemäße Emulsion jeweils genau ein Polyol **A1a**, **A1b** und **A1c**, sowie, falls jeweils vorhanden, jeweils genau ein Polyol **A1d**, **A1e** und **A1f**. Des Weiteren ist es bevorzugt, dass neben **A1a**, **A1b** und **A1c** sowie, falls jeweils vorhanden, **A1d**, **A1e** und **A1f** keine weiteren Polyole vorhanden sind, d. h. die Polyolmischung **A1** besteht in bevorzugten Ausführungsformen aus maximal sechs Polyolen.

In der Regel ist es vorteilhaft, wenn die Isocyanat-reaktive Zusammensetzung **A** neben der Polyolmischung umfassend **A1** noch weitere Komponenten enthält. Solche Komponenten sind dem Fachmann grundsätzlich bekannt und umfassen beispielsweise Wasser, Schaumstabilistatoren, Katalysatoren, Flammschutzmittel sowie ggf. weitere Hilfs- und Zusatzstoffe. In besonders bevorzugten Ausführungsformen umfasst die Isocyanat-reaktive Zusammensetzung **A** zusätzlich

(vi) Wasser **A2**;

(vii) wenigstens einen Schaumstabilisator **A3** ausgewählt aus der Gruppe der Polyether-Polydimethylsiloxan-Copolymeren, bevorzugt solche Copolymere, die mit Propylenoxid- und/oder Ethylenoxid-haltigen Polyether-Seitenketten funktionalisiert worden sind;

und

(viii) wenigstens einen Katalysator **A4** ausgewählt aus der Gruppe
Triethylendiamin, N,N-Dimethylcyclohexylamin, Dicyclohexylmethylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, Natrium-N-[(2-hydroxy-5-nonylphenyl)methyl]-N-methylaminoacetat, N-Cyclohexylmorpholin, 2,3-Dimethyl-3,4,5,6-tetra-hydropyrimidin, Triethanolamin, Diethanolamin, Triisopropanolamin, N-Methyldiethanolamin, N-Ethyldiethanolamin, Dimethylethanolamin,
erforderlichenfalls (sofern hohe Polyisocyanuratanteile gewünscht sind) zusammen mit wenigstens einem Katalysator ausgewählt aus der Gruppe
Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid.

Das Wasser erfüllt dabei die Funktion eines chemischen Co-Treibmittels, d. h. durch Reaktion mit den Isocyanatgruppen wird Kohlendioxid freigesetzt, welches zusätzlich zu **T** als Treibmittel wirkt.

Für die Einstellung einer stabilen Emulsion ist es darüber hinaus vorteilhaft, bestimmte Mengenverhältnisse von Treibmittel **T** zu der Polyolmischung **A1** einzuhalten. In bevorzugten Ausführungsformen betrifft die Erfindung daher eine Emulsion, bei der das Massenverhältnis **A1** : **T** $\geq$ 5:1 bis $\leq$ 12:1 beträgt, bevorzugt $\geq$ 10:1 bis $\leq$ 5:1, besonders bevorzugt $\geq$ 9:1 bis $\leq$ 6:1.

In bevorzugten Ausführungsformen der erfindungsgemäßen Emulsion liegen die Komponenten der Isocyanat-reaktiven Zusammensetzung **A** in den folgenden Massenanteilen, jeweils bezogen auf die Gesamtmasse der Isocyanat-reaktiven Zusammensetzung **A**, vor:

Polyol **A1a** von 5 Massen-% bis 60 Massen-%, bevorzugt von 15 Massen-% bis 50 Massen-%,

Polyol **A1b** von 5 Massen-% bis 60 Massen-%, bevorzugt von 10 Massen-% bis 50 Massen-%

Polyol **A1c** von 5 Massen-% bis 60 Massen-%, bevorzugt von 15 Massen-% bis 50 Massen-%,

Polyol **A1d** von 0 Massen-% bis 20 Massen-%, bevorzugt von 0 Massen-% bis 15 Massen-%,

Polyol **A1e** von 0 Massen-% bis 20 Massen-%, bevorzugt von 0 Massen-% bis 15 Massen-%,

Polyol **A1f** von 0 Massen-% bis 20 Massen-%, bevorzugt von 0 Massen-% bis 15 Massen-%

Wasser **A2** von 0 Massen-% bis 5 Massen-%, bevorzugt von 0,5 Massen-% bis 3 Massen-%

Schaumstabilisator **A3** von 1 Massen-% bis 10 Massen-%, bevorzugt von 1,5 Massen-% bis 8 Massen-%

Katalysator **A4** von 0,5 Massen-% bis 5 Massen-%, bevorzugt von 1 Massen-% bis 4 Massen-%.

Die erfindungsgemäße Emulsion enthält die Polyolmischung **A1** bevorzugt in einem Massenanteil von 80 Massen-% bis 90 Massen-% und das physikalische Treibmittel **T** in einem Massenanteil von 10 Massen-% bis 20 Massen-%, jeweils bezogen auf die Gesamtmasse der Emulsion.

Für den Fall, dass von einer Komponente mehrere Vertreter vorhanden sind (z. B. ein Gemisch aus zwei physikalischen Treibmitteln **T**, **T1** und **T2**), gelten die oben genannten Massenanteile für die Summe der jeweiligen Vertreter einer Komponente (d. h. im genannten Beispielfall zweier physikalischer Treibmittel **T** beträgt die Summe der Massenanteile aus **T1** und **T2** in der Emulsion 10 Massen-% bis 20 Massen-%).

In besonders bevorzugten Ausführungsformen sind keine weiteren Komponenten vorhanden, d. h. die Emulsion besteht besonders bevorzugt aus maximal **A1a, A1b, A1c, A1d, A1e, A1f, A2, A3, A4** und **T**. Außerordentlich besonders bevorzugt besteht die Emulsion aus **A1a**, **A1b**, **A1c**, **A2**, **A3**, **A4** und **T**.

Die Herstellung der erfindungsgemäßen Emulsionen erfolgt bevorzugt derart, dass die einzelnen Komponenten der Polyolmischung **A1** (d. h. mindestens die Polyole **A1a**, **A1b** und **A1c**, ggf. weitere Polyole sowie ggf. Hilfs- und Zusatzstoffe wie weiter oben definiert) in beliebiger Reihenfolge, in der Regel bei Umgebungsdruck und -temperatur, vermischt werden und dann das Treibmittel **T** zu der so erhaltenen Polyolmischung **A1** zugegeben wird.

Die Emulsionen können beispielsweise derart erzeugt werden, dass die Komponenten für **A** in beliebiger Weise miteinander vermischt werden, typischerweise bei Raumtemperatur unter Umgebungsluftdruck und anschließend das Treibmittel **T** hinzugefügt wird. Die Emulgierung kann beispielsweise mittels eines Hochscherratenmixers wie eines Strahldispergators oder eines Rotor-Stator-Dispergators. Repräsentative Beispiele sind beispielsweise in Schubert, H. (editor); Emulgiertechnik; R. Behr's Verlag, Hamburg, 2005, angegeben.

Die erfindungsgemäßen Emulsionen zeichnen sich durch eine hohe Stabilität aus, ohne dass dies durch eine übermäßig erhöhte Viskosität erkauft werden müsste. Unter *"stabil"* wird dabei verstanden, dass die Emulsion für mindestens 2 Stunden, bevorzugt für mindestens 1 Tag, besonders bevorzugt für mindestens 3 Tage, ganz besonders bevorzugt für mindestens 5 Tage, bei Raumtemperatur und Normaldruck gelagert werden kann, ohne dass eine Phasenseparation von Polyolmischung **A1** und Treibmittel **T** auftrifft. Bevorzugt beträgt die Viskosität einer erfindungsgemäßen Isocyanat-reaktiven Zusammensetzung **A** bei 25 °C 1000 mPa s bis 18000 mPa s, besonders bevorzugt 1500 mPa s bis 12000 mPa s und ganz besonders bevorzugt 2000 mPa s bis 12000 mPa s. Die Viskosität wird dabei bestimmt nach EN ISO 3219 in der Fassung vom Oktober 1994.

Ein weiterer Gegenstand der Erfindung ist ein Verfahren zur Herstellung eines Polyurethan-haltigen Polymers **C**, bei dem eine Isocyanatkomponente **B** mit einer erfindungsgemäßen Emulsion umfassend die Polyolmischung **A1** und ein physikalisches Treibmittel **T** umgesetzt wird. Die Herstellung Polyurethan-haltiger Polymere aus Isocyanatkomponenten und Isocyanat-reaktiven Komponenten in Gegenwart von Treibmitteln sowie ggf. weiterer Hilfs- und Zusatzstoffen ist dem Fachmann grundsätzlich bekannt und wurde bereits vielfach beschrieben. Die Herstellung der erfindungsgemäßen Polyurethan-haltigen Polymere **C** erfolgt bevorzugt nach dem Fachmann bekannten Verfahren. Beispiele sind in US 2,764,565 sowie in G. Oertel (Hrsg.) "Kunststoff-Handbuch", Band VII, Carl Hanser Verlag, 3. Auflage, München 1993, S. 267 bis 354 sowie in K. Uhlig (Hrsg.) "Polyurethan Taschenbuch", Carl Hanser Verlag, 2. Auflage, Wien 2001, S. 83 bis 102 beschrieben. Die Verschäumung der Komponenten zum Polyurethan-haltigen Polymer **C** kann grundsätzlich wie aus dem beispielhaft zitierten Stand der Technik bekannt erfolgen.

In bevorzugten Ausführungsformen des erfindungsgemäßen Verfahrens ist die Isocyanatkomponente **B**

a) wenigstens ein Isocyanat **B1** ausgewählt aus der Gruppe bestehend aus Toluylendiisocyanat, Diphenylmethandiisocyanat, Polyphenylpolymethylenpolyisocyanat (PMDI), Xylylendiisocyanat, Naphthylendiisocyanat, Hexamethylendiisocyanat, Diisocyanatodicyclohexylmethan und Isophorondiisocyanat,
oder

b) ein Isocyanat-terminiertes Präpolymer **B2** hergestellt aus wenigstens einem Polyisocyanat **B1** und wenigstens einer Isocyanat-reaktiven Verbindung ausgewählt aus wenigstens einem der Polyole **A1a**, **A1b**, **A1c**, **A1d** und **A1f**. oder

c) eine Mischung aus **B1** und **B2**.

Bevorzugt wird die Umsetzung der Isocyanatkomponente **B** mit der Emulsion A bei Kennzahlen von 95 bis 180, bevorzugt von 95 bis 150, besonders bevorzugt von 100 bis 130, durchgeführt. Unter der *"Kennzahl"* (auch *Isocyanat-Index* genannt) wird dabei der Quotient aus der tatsächlich eingesetzten Stoffmenge [Mol] an Isocyanat-Gruppen und der für vollständigen Umsatz aller Isocyanat-reaktiven Gruppen stöchiometrisch benötigten Stoffmenge [Mol] an Isocyanat-Gruppen, multipliziert mit 100, verstanden. Da für die Umsetzung eines Mols einer Isocyanat-reaktiven Gruppe ein Mol einer Isocyanat-Gruppe benötigt wird, gilt:

$$\text{Kennzahl} = (\text{Mole Isocyanat-Gruppen} \, / \, \text{Mole Isocyanat-reaktive Gruppen}) \cdot 100$$

Ein weiterer Gegenstand der vorliegenden Erfindung sind die Polyurethan-haltigen Polymere **C**, erhältlich nach dem zuvor beschriebenen erfindungsgemäßen Verfahren. Solche Polyurethan-haltigen Polymere **C** können über kontinuierliche und diskontinuierliche Verarbeitungsmethoden hergestellt werden und eignen sich besonders für die Verwendung als Isoliermaterialien.

Im Falle von diskontinuierlich hergestellten Polyurethan-haltigen Polymeren **C** handelt es sich um Formschäume, die sowohl an der Ober- als auch an der Unterseite durch Dekorschichten begrenzt werden. Als Dekorschichten kommen unter anderem Metalle, Kunststoffe, Holz und Papier in Frage. Als Anwendungsgebiete solcher diskontinuierlich hergestellten PUR-Verbundelemente sind insbesondere zu nennen die technische Isolierung von Geräten wie Kühlschränken, Kühltruhen, Kühlgefrierkombinationen und Boilern, Kühlcontainern und Kühlboxen sowie von Rohren.

Im Falle von kontinuierlich hergestellten Polyurethan-haltigen Polymeren **C** handelt es sich um kontinuierlich hergestellte PUR-Schaumblöcke definierter Breite und variabler Dicke, die bevorzugt sowohl an der Ober- als auch an der Unterseite durch Dekorschichten begrenzt werden. In bestimmten Anwendungsbereichen (bspw. im Bauwesen) kann auf Dekorschichten jedoch auch völlig verzichtet werden. Als Dekorschichten kommen vor allem Metalle, Metallfolien, Kunststoffe, Holz und Papier in Frage. Als Anwendungsgebiete solcher kontinuierlich hergestellten Polyurethanhaltigen Polymere **C** sind insbesondere zu nennen die technische Isolierung von Kühlhäusern und die Wärmedämmung im Baubereich.

Der Einsatz von Polyurethan-haltigen Polymeren auf diesen Gebieten ist dem Fachmann grundsätzlich bekannt und wurde schon vielfach beschrieben. Die erfindungsgemäßen Polyurethan-haltigen Polymere **C** eignen sich außerordentlich gut für diese Zwecke, da sie sich durch geringe Wärmeleitzahlen auszeichnen, ohne dass in der Herstellung der Schäume bzw. deren Applikation auf geeignete Substrate (wie z. B. Gehäuse von Kühlgeräten oder Rohren) Verarbeitungsprobleme durch zu hohe Viskositäten zu befürchten wären. Ein weiterer Gegenstand der vorliegenden Erfindung betrifft einen geschäumten Formkörper, der nach einem erfindungsgemäßen Verfahren erhältlich ist.

Die Erfindung betrifft zudem einen Kühlschrank, einen Gefrierschrank oder eine Kühl-Gefrierkombination, umfassend einen erfindungsgemäß erhältlichen geschäumten Formkörper, wobei die bereitgestellte Form insbesondere ein Gehäuseteil des Kühlschranks, des Gefrierschranks oder der Kühl-Gefrierkombination ist. Die vorliegende Erfindung wird anhand der nachfolgenden Beispiele und Zeichnungen weiter erläutert, ohne jedoch darauf beschränkt zu sein. Es zeigen:

FIG. 1     ein Verfahren zum Befüllen einer Form mit einem schaumbildenden Reaktionsgemisch,

FIG. 2     ein alternatives Verfahren zum Befüllen einer Form mit einem schaumbildenden Reaktionsgemisch,

FIG.3     einen Mischkopf in einer ersten Arbeitsstellung,

FIG.4     den Mischkopf aus Fig. 3 in einer zweiten Arbeitsstellung, sowie

FIG. 5     eine Gehäuseform in aufgeklappter Darstellung.

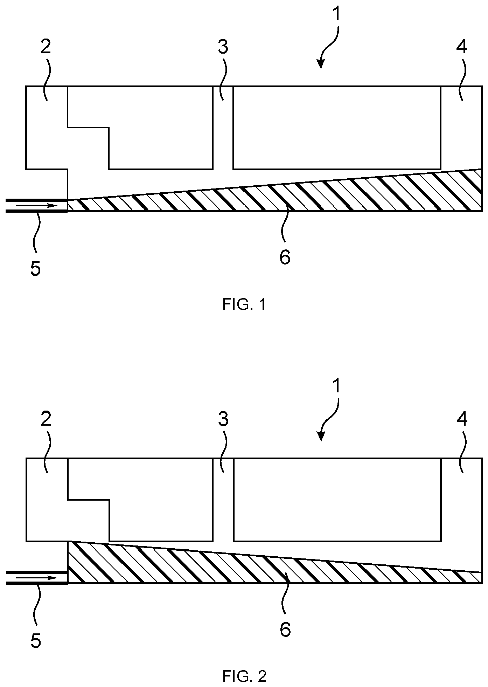

FIG. 1 zeigt schematisch den Zustand kurz nach dem Befüllen einer Form 1 mit einem schaumbildenden Reaktionsgemisch 6. Die Form 1 ist als Hohlkörper ausgeführt und in Querschnittsansicht dargestellt. Bei der Form 1 kann es sich um ein Isolierelement für eine Kombination aus Kühlschrank und Gefriertruhe handeln. So weist die horizontal liegende Form 1 vertikal angeordnete Abschnitte 2, 3 und 4 auf. Der Abschnitt 2 bildet den Bodenabschnitt, Abschnitt 3 trennt Kühlfach und Gefrierfach voneinander und Abschnitt 4 bildet den Kopfabschnitt. Es wird ein horizontal angeordnetes Bodenvolumen gebildet. Die Hohlräume der Abschnitte 2, 3 und 4 bilden vertikal angeordnete, mit dem Bodenvolumen kommunizierende Volumina.

Zum Befüllen der Form wird ein Austragsrohr 5 mit einer entsprechenden Einfüllöffnung der Form 1 verbunden. Aus dem Austragsrohr 5 wird eine schaumbildende Reaktionsmischung 6, die vorzugsweise einen Polyurethanschaum ergibt, eingefüllt. In dem in FIG. 1 dargestellten Fall wurde das Reaktionsgemisch 6 zunächst mit hohem Injektionsdruck eingefüllt und danach der Injektionsdrucks beginnend von 170 bar bis auf 120 bar kontinuierlich reduziert. Durch den anfänglich hohen Injektionsdruck und die damit verbundene hohe Austrittgeschwindigkeit des Reaktionsgemisches aus einem nicht näher dargestellten Mischkopf wurde das Reaktionsgemisch 6 in den hinteren Bereich der Form 1 befördert. Ein sukzessives Verringern des Injektionsdrucks beförderte Reaktionsgemisch 6 in den vorderen Teil der Form 1. So wird über die gesamte Länge der Form 1 Reaktionsmischung 6 gleichmäßig aufgetragen.

Durch die Verwendung eines Reaktionsgemischs mit der erfindungsgemäßen kurzen Abbindezeit stellt sich auf diese Weise das in FIG. 1 dargestellte keilförmige Profil der Reaktionsmischung 6, da die Schaumbildung im hinteren Teil der Form 6 bereits während des Befüllens eingesetzt hat. Der Hohlraum des Abschnitts 4 der Form 1 wird zuerst mit Schaum ausgefüllt. Bei einem weiteren Einsetzen der Schäumreaktion wird Material in die Hohlräume der Abschnitte 3 und 2 gedrückt. Es kommt in Verbindung mit einer verbesserten vollflächigen Vorverteilung des anfangs noch flüssigen Reaktionsgemisches zu gleichmäßigeren Fließwegdistanzen innerhalb der Form 1. Als Folge davon erhält man eine homogenere Rohdichteverteilung sowie isotropere Zellgeometrien mit verbesserten mechanischen Eigenschaften und Isolationseigenschaften innerhalb des erhaltenen geschäumten Formkörpers. Zudem wird auf diese Weise die Gefahr der Ausbildung von Lunkern erheblich vermindert.

FIG. 2 zeigt den gegenüber FIG. 1 umgekehrten Fall des Befüllens der Form 1. Hier wurde die Reaktionsmischung 6 zunächst bei geringerem Injektionsdruck (120 bar) aufgefüllt und danach der Injektionsdruck bis auf 170 bar erhöht. Auf diese Weise kann zum Beispiel ein in Nähe der Einfüllöffnung gelegenes größeres Volumen, wie es der Hohlraum des Abschnitts 2 darstellt, gut erreicht werden.

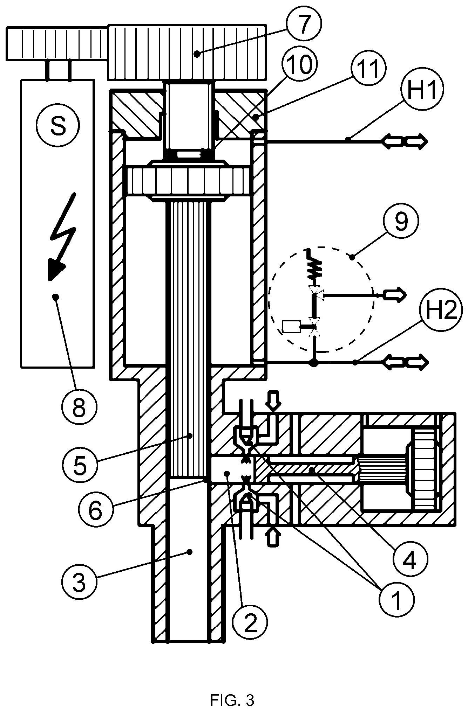

In FIG. 3 ist ein Mischkopf zur Verwendung mit dem erfindungsgemäßen Verfahren abgebildet. Im vorliegenden Fall ist er als Umlenkermischkopf konzipiert. Die Reaktionskomponenten werden jeweils über Düsen 1 in eine zylindrische Mischkammer 2 injiziert, wobei der Injektionsdruck für beide Komponenten separat eingestellt werden kann und über die Dauer des Ausschäumvorgangs varriiert wird. Die Reaktionskomponenten vermischen sich in der zylindrischen Mischkammer 2 durch kinetische Energie und strömen anschließend über eine 90°-Umlenkung in ein Auslaufrohr 3, dessen Querschnittsfläche sich deutlich vergrößert und dadurch eine Fließberuhigung des Gemischstroms erzeugt.

Nach Beendigung des Gemischaustrags werden die Komponentenströme über Nuten in einem Steuerkolben 4 in eine Kreislaufstellung geschaltet. Gleichzeitig werden über den Steuerkolben 4 Gemischreste aus der Mischkammer 2 in das Auslaufrohr ausgetragen. Im Anschluss erfolgt die Reinigung des Auslaufrohres 3 über einen weiteren Stößel 5. Die Schaltvorgänge werden über schematisch eingezeichnete Hydrauliken "H1" und "H2" mit Drücken von etwa 100 bis 160 bar bewerkstelligt, um schnelle, aber auch kraftvolle Schaltbewegungen realisieren zu können.

Neben der Reinigungsfunktion dient der Reinigungsstößel 5 auch als Drosseleinrichtung. Üblicherweise wird durch eine manuell über Feingewinde verstellbare Hubbegrenzung der Verfahrweg des Stößels 5 auf Anschlag derart begrenzt, dass das in Strömungsrichtung untere Stößelende eine Überdeckung des Übergangs zwischen der Mischkammer 2 und dem Auslaufrohr 3 erzeugt. Je nach Überdeckungsgrad verändert sich der freie Abflussquerschnitt 6, wodurch das Mischkammerdruckniveau wie auch die Mischqualität beeinflusst wird.

In der in Fig. 3 gezeigten Arbeitsstellung ist der Gemischaustrag stark gedrosselt. Im vorliegenden Mischkopf ist die manuelle Handverstellung demontiert und durch ein Zahnradpaar 7 ersetzt. Am Mischkopfgehäuse erfolgt die Befestigung eines Servomotors "S" 8, der über das Zahnradpaar 7 mit der Hubbegrenzung formschlüssig verbunden und in der Anlagensteuerung integriert ist.

Zwecks Reduzierung der auf das Verstellgewinde wirkenden Klemm- und Reibwiderstände wird der hydraulische Schaltdruck des Reinigungsstößels 5 während der Gemischaustrittsphase über eine Bypassschaltung 9 auf < 10 bar abgesenkt. Die Kontaktfläche zwischen dem Hubanschlag und dem Hydraulikkolben ist durch ein Axialkugellager 10 gegen Momentübertragungen entkoppelt. Somit dient der hydraulische Druck je nach Bewegungsrichtung nur noch der Nachführung des Hydraulikkolbens gegen die veränderbare Hubbegrenzung beziehungsweise der Positionsfixierung gegen die Anschlagfläche.

Nach Beendigung des Gemischaustritts verfährt der Servomotor 8 die Hubbegrenzung in die obere Endlage, wobei das Axialkugellager 10 in die nach oben begrenzende Zylinderplatte 11 eintaucht. In dieser Position schließt das Bypassventil und der Reinigungsstößel 5 kann mit üblichem Hydraulikdruck geschaltet werden. Durch die Verwendung eines Servomotors wird eine hochpräzise und reproduzierbare Drosselstellung realisiert, die abhängig vom Gemischaustrag über die Gemischaustragszeit angepasst werden kann.

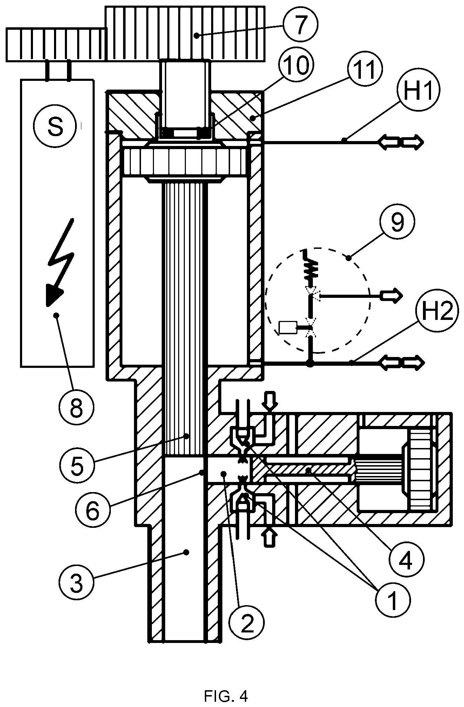

Die FIG. 4 zeigt den Mischkopf gemäß FIG. 3, wobei jedoch aufgrund der unterschiedlichen Position des Stößels 5 der freie Abflussquerschnitt 6 vergrößert ist. Im Ergebnis ist der Gemischaustrag ungedrosselt.

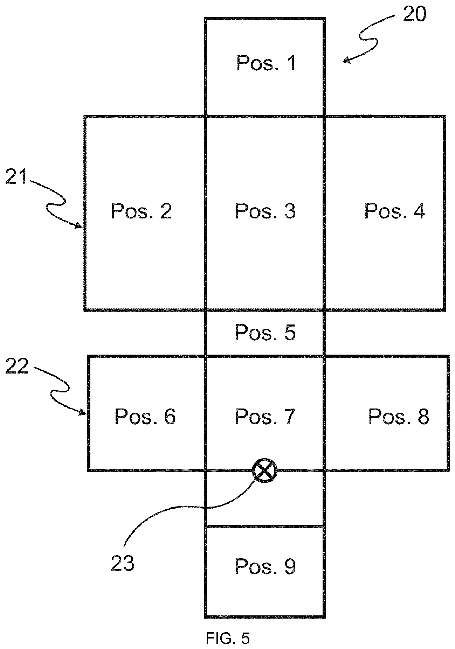

In Fig. 5 ist eine Gehäuseform 20 einer Kühl-Gefrierkombination mit einem Kühlbereich 21 und einem Gefrierbereich 22 für die Ausschäumversuche der vorliegenden Erfindung in aufgeklappter Darstellung gezeigt. Die Form 20 entspricht den gängigen Maßen einer Kühl-Gefrierkombination und besitzt ein Hohlvolumen von 164 L. Die einzelnen Wandungen sind mit den Positionsangaben Pos. 1 bis Pos. 9 gekennzeichnet. Die Form 20 wird an einer an der Kompressorstufe der Kühl-Gefrierkombination befindlichen Einfüllposition 22 mit einer Polyurethan-Reaktionsmischung wie unten beschrieben befüllt.

### Beispiele A

Die Herstellung der erfindungsgemäßen PUR-Hartschaumstoffe erfolgt nach dem dem Fachmann bekannten Einstufenverfahren, bei dem die Reaktionskomponenten kontinuierlich oder diskontinuierlich miteinander zur Reaktion gebracht werden und dann in bzw. auf geeignete Formen/Substrate zur Aushärtung gebracht werden. Dieses Verfahren ist beispielsweise beschrieben in US 2,761,565 A, in G. Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102.

Im vorliegenden Falle wurden die 2-Komponenten-Rezepturen bestehend aus einer treibmittelhaltigen Polyolformulierung 1 oder 2 gemäß Tabelle 1 und einem Isocyanat mittels einer konventionellen Hochdruckmaschine (HK 650 der Firma Hennecke) und einem Hochdruckmischkopf (MX 18 der Firma Hennecke) verarbeitet. Die auszuschäumende Gehäuseform gemäß Figur 5 entspricht den gängigen Maßen einer Kühl-Gefrierkombination und besitzt ein Hohlvolumen von 164 L. Der Eintrag erfolgte an der Kompressorstufe. Die Formtemperatur betrug 38 - 40 °C, die Temperatur der Rohstoffe betrug 20 - 22 °C.

Es kamen folgende Stoffe zum Einsatz:

Polyol 1:  Polyetherpolyol mit einer OHZ von 450 mg KOH/g, einer theoretischen Funktionalität von 4,7 und einer Viskosität von 15000 mPas bei 25 °C (Bayer MaterialScience);

Polyol 2:  Polyetherpolyol mit einer OHZ von 380 mg KOH/g, einer theoretischen Funktionalität von 4,6 und einer Viskosität von 5350 mPas bei 25 °C (Bayer MaterialScience);

Polyol 3:  Polyetherpolyol mit einer OHZ von 400 mg KOH/g, einer theoretischen Funktionalität von 4,0 und einer Viskosität von 26500 mPas bei 25 °C (Bayer MaterialScience);

Polyol 4:  Polyetherpolyol mit einer OHZ von 112 mg KOH/g, einer theoretischen Funktionalität von 2,0 und einer Viskosität von 140 mPas bei 25 °C (Bayer MaterialScience);

Polyol 5:  Aromatischer Polyetheresterpolyol mit einer OHZ 300 mg KOH/g, einer theoretischen Funktionalität von 2,0 und einer Viskosität von 6500 mPas bei 25 °C, hergestellt aus der Umsetzung von Phtalsäureanhydrid mit Diethylenglykol mit anschließender Ethoxylierung (Bayer MaterialScience);

Stabilisator:  Tegostab® (Evonik)

Aminkatalysator:  tertiäre Amine, die in der PUR-Chemie Standardkatalysatoren und dem durchschnittlichen Fachmann sehr wohl bekannt sind

Isocyanate:  polymeres MDI (Desmodur® 44V20L, Bayer MaterialScience)

Die Polyolformulierungen 1 und 2 setzten sich wie folgt zusammen.

**Tabelle 1**: Verarbeitungsrezepturen, Angaben in Gewichtsteilen.

| Polyol-Formulierungen: | Formulierung 1 | Formulierung 2 |
|---|---|---|
| Polyol 1 | 43,0 | 35 |
| Polyol 2 |  | 35 |
| Polyol 3 | 42,0 | 25 |
| Polyol 4 | 5,0 | 5 |
| Polyol 5 | 10,0 |  |

(fortgesetzt)

| Polyol-Formulierungen: | Formulierung 1 | Formulierung 2 |
|---|---|---|
| Wasser | 2,0 | 2,4 |
| Stabilisator | 2,0 | 1,7 |
| Amin-Katalysator | 3,2 | 1,7 |
| Rezepturen: | Rezeptur 1 | Rezeptur 2 |
| Formulierung 1 | 100 | |
| Formulierung 2 | | 100 |
| Cyclopentan | 16,0 | 13,5 |
| Isocyanat | 130 | 143 |

Die Versuche wurden so durchgeführt, dass die Austragsleistung der Maschine während der gesamten Schusszeit variiert werden konnte. Hierzu wurde bei Bedarf (vgl. Tabelle 2) ausgehend von Austragsleistung 1 zu Beginn des Schusses die Austragsleistung linear bis hin zu Austragsleistung 2 am Ende des Schusses geändert. Es wurden sowohl Versuche mit steigender als auch mit abnehmender Austragsleistung durchgeführt. Des Weiteren wurden die minimale und maximale Austragsleistung so eingestellt, dass die Austragszeiten, die für den Austrag einer konstanten Masse erforderlich waren, bei < 10 s, $\geq$ 10 s, $\geq$ 15 s und $\geq$ 20 s lagen. Die Verarbeitungsparameter sind in Tabelle 2 zusammengefasst.

Tabelle 2: Verarbeitungsparameter der Maschinenversuche mit dynamischem Eintrag.

| Beispiel | | 1 (Erf.) | 2 (V) | 3 (V) | 4 (Erf.) | 5 (Erf.) | 6 (Erf.) | 7 (V) |
|---|---|---|---|---|---|---|---|---|
| Rezeptur 1 | | X | | X | X | X | X | X |
| Rezeptur 2 | | | X | | | | | |
| Liegezeit | s | 5 | 5 | 5 | 5 | 5 | 5 | 5 |
| Abbindezeit | s | 27 | 39 | 28 | 30 | 27 | 27 | 29 |
| freie Rohdichte | kg/m$^3$ | 22,2 | 23,1 | 22,0 | 21,0 | 22,3 | 22,2 | 21,0 |
| Einfüll-Rohdichte | kg/m$^3$ | 36,4 | 36,0 | 36 | 35,8 | 36,5 | 35,8 | 35,8 |
| Eintragszeit | s | 7,2 | 7,6 | 20,0 | 15,0 | 10,0 | 7,3 | 6,1 |
| Austragsleistung 1 | g/s | 960 | 960 | 580 | 608 | 960 | 608 | 960 |
| Austragsleistung 2 | g/s | 608 | 608 | 0 | 175 | 175 | 960 | - |
| Eintragszeit/ Liegezeit | | 1,4 | 1,5 | 4 | 3,8 | 2 | 1,5 | 1,4 |
| Austragsgeschwindigkeit 1 | m/s | 3,8 | 3,8 | 2,3 | 2,4 | 3,8 | 2,4 | 3,8 |
| Austragsgeschwindigkeit 2 | m/s | 2,4 | 2,4 | 0,0 | 0,8 | 0,8 | 3,8 | - |

Nach dem Aushärten des Schaums wurde an den in Fig. 5 gekennzeichneten Positionen Pos. 1 bis Pos. 9 die Schaumeigenschaften untersucht. Die Ergebnisse sind in der folgenden Tabelle 3 zusammengefasst.

Tabelle 3: Ergebnisse der Maschinenversuche.

| Beispiel | 1 (Erf.) | 2 (V) | 3 (V) | 4 (Erf.) | 5 (Erf.) | 6 (Erf.) | 7 (V) |
|---|---|---|---|---|---|---|---|
| Wärmeleitzahl bei 10 °C Mittentemperatur [mWm$^{-1}$K$^{-1}$]: | | | | | | | |
| Pos 1 | 18,53 | 19,07 | - | - | - | 18,27 | 18,51 |
| Pos 2 | 18,22 | 18,78 | - | 19,24 | 18,68 | 18,28 | 18,51 |
| Pos 3 | 18,48 | 19,10 | - | 20,13 | 19,18 | 18,36 | 18,57 |
| Pos 4 | 18,20 | 18,87 | - | 19,02 | 18,65 | 18,46 | 18,40 |

(fortgesetzt)

| Beispiel | 1 (Erf.) | 2 (V) | 3 (V) | 4 (Erf.) | 5 (Erf.) | 6 (Erf.) | 7 (V) |
|---|---|---|---|---|---|---|---|
| *Wärmeleitzahl bei 10 °C Mittentemperatur [mWm$^{-1}$K$^{-1}$]:* | | | | | | | |
| Pos 5 | 18,33 | 18,88 | - | 18,22 | 18,22 | 18,25 | 18,19 |
| Pos 6 | 18,60 | 19,10 | - | 18,56 | 18,66 | 19,28 | 18,86 |
| Pos 7 | 18,28 | 18,88 | - | 18,77 | 18,80 | 18,24 | 18,47 |
| Pos 8 | 18,87 | 18,73 | - | 18,65 | 18,88 | 19,32 | 19,05 |
| Pos 9 | 18,65 | 18,99 | - | 18,55 | 18,59 | 19,42 | 19,00 |
| **MW** | **18,46** | **18,93** | **-** | **18,89** | **18,71** | **18,65** | **18,62** |
| **STABW** | **0,22** | **0,14** | **-** | **0,59** | **0,27** | **0,52** | **0,31** |
| *Kernrohdichte [kg/m$^3$]:* | | | | | | | |
| Pos 1 | 32 | 31 | - | - | - | 33 | 32 |
| Pos 2 | 32 | 33 | - | 31 | 32 | 34 | 33 |
| Pos 3 | 33 | 34 | - | 30 | 32 | 32 | 33 |
| Pos 4 | 32 | 32 | - | 30 | 31 | 32 | 32 |
| Pos 5 | 33 | 34 | - | 31 | 33 | 31 | 32 |
| Pos 6 | 32 | 32 | - | 32 | 34 | 30 | 31 |
| Pos 7 | 33 | 33 | - | 33 | 34 | 31 | 32 |
| Pos 8 | 32 | 32 | - | 32 | 34 | 30 | 31 |
| Pos 9 | 33 | 34 | - | 33 | 36 | 30 | 31 |
| **MW** | **32,4** | **32,8** | **-** | **31,5** | **33,3** | **31,4** | **31,9** |
| **STABW** | **0,53** | **0,93** | **-** | **1,20** | **1,58** | **1,42** | **0,83** |
| *Beurteilung der Schaumverteilung:* | | | | | | | |
| Oberfläche | lunkerfrei | lunkerfrei | stark gestört | Lunker an Pos. 1-4 | Lunker an Pos. 1-4 | Lunker an Pos. 6-9 | Lunker an Pos. 6-9 |
| allgemein | - | - | Form nur bis Pos. 5 gefüllt, starker Schrumpf | Pos. 1 nicht ausgefüllt, Schrumpf an Pos. 1-4 | Pos. 1 zu stark geschrumpft | - | - |
| * Beispiele 4 bis 6 sind nicht erfindungsgemäß sondern Vergleichsbeispiele. | | | | | | | |

In Beispiel 1 wurde erfindungsgemäß die schnelle Polyolformulierung 1 mittels dynamischem Eintrag und einem für die verwendete Gehäusegeometrie optimierten Gradienten verarbeitet. Die Verteilung der Kernrohdichten und der ermittelten Wärmeleitfähigkeiten ist in Beispiel 1 sichtlich am besten, was an der geringen Standardabweichung von 0,53 deutlich wird. Im Vergleich dazu sind sowohl der Mittelwert als auch die Standardabweichung der Wärmeleitfähigkeit in Beispiel 7 bereits schlechter, was den positiven Einfluss einer optimalen Vorverteilung wie in Beispiel 1 betont.

In Beispiel 7 wurde die Verteilung nicht optimiert sondern, wie allgemein in der Kühlschrankindustrie üblich, mit einem konstanten Austrag gearbeitet. Der Nachteil bei dieser Methode, dass nämlich in das bereits aufschäumende Gemisch weiterhin eingetragen wird, zeigt sich auch an dem deutlich schlechteren Lunkerbild im Vergleich zu Beispiel 1. Für Beispiel 6 wurde derselbe Gradient für die dynamische Injektion wie in Beispiel 1 mit der schnellen Polyolformulierung 1 gewählt, nur diesmal wurde er umgekehrt, von minimaler zu maximaler Austragsleistung, gefahren. Die Nachteile zeigen sich in dem schlechteren Lunkerbild an Position 6 bis 9 und an der schlechteren Kernrohdichteverteilung verbunden mit einer insgesamt höheren mittleren Wärmeleitfähigkeit, also einer geringeren Isolationswirkung.

Bei den Beispielen 3, 4 und 5 wurde jeweils mit dynamischem Austrag gearbeitet, wobei die Austragsleistungen jeweils so angepasst wurden, dass sich Eintragszeiten von 20 s, 15 s und 10 s ergaben. Die Vorverteilung bei Beispiel 3 war so schlecht, dass die Gehäuseform nicht ausgefüllt werden konnte, da der Schaum nur bis Position 5 floss. Mit kürzeren Eintragszeiten, wie in den Beispielen 4 und 5, wurde die Gehäuseform beinahe (Beispiel 4) und vollständig (Beispiel 5) ausgefüllt. Jedoch wiesen diese Formteile jeweils einen starken Schrumpf an Position 1 auf, weswegen für diese Position keine Werte ermittelt werden konnten. Des Weiteren zeichneten sich deutliche Lunker an den Positionen 1 bis 4 am Fließwegende ab. Man erkennt die mangelnde Vorverteilung des Reaktionsgemisches an den im Mittel deutlich höheren Werten der Wärmeleitfähigkeit und der stärkeren Streuung dieser und der Rohdichte.

In Beispiel 2 wurde die langsamere Polyolformulierung 2 in der Rezeptur 2 unter identischen Bedingungen wie Rezeptur 1 in Beispiel 1 verarbeitet. Hierbei wird die Effektivität der erfindungsgemäßen Injektionsmethode deutlich, da sich die mittlere Wärmeleitfähigkeit zwar um ca. +0.5 mWm$^{-1}$K$^{-1}$ von der aus Beispiel 1 unterscheidet, jedoch ist die Streuung mit einer Standardabweichung von 0,14 minimal. Vergleicht man die Ergebnisse aus Beispiel 2 mit denen aus Beispiel 4 erkennt man, dass mit der dynamischen Injektion in Kombination mit einer unreaktiveren Rezeptur bessere Ergebnisse in Bezug auf die Schaumverteilung, Oberflächenqualität und Lunkerbild zu erzielen sind als mit einer schnellen bei vergleichbaren mittleren Wärmeleitfähigkeiten.

## Beispiele B

Es wurden ferner allgemeine Versuche bei Dämmelementen für Kühl-Gefrierschrank-Kombinationen durchgeführt. Bei diesen Versuchen wurde untersucht, mit welchen Verfahren die für eine homogene Ausschäumung der Form benötigte Menge an schaumbildendem Reaktionsgemisch möglichst gering gehalten werden kann. Es wurde ein mit einem flüssigen Treibmittel getriebenes Polyurethan-Hartschaumsystem eingesetzt und die Ergebnisse durch technisch geschultes Personal optisch begutachtet. Es wurde jeweils die gleiche auszuschäumende Form eingesetzt.

Die Liegezeit wurde visuell bestimmt. Hierzu beobachtete eine befähigte Person das Reaktionsgemisch nach Austritt aus dem Mischkopf. Die Zeit vom Vermischen der Komponenten bis zu dem Zeitpunkt, bei dem das Ancremen des Reaktionsgemischs durch eine Farbverschiebung hin zu einer helleren Verfärbung und ein beginnendes Aufschäumen visuell erkennbar wird, ist die Liegezeit.

Die Abbindezeit wurde dadurch ermittelt, dass die Reaktanden des Reaktionsgemischs miteinander bei 20°C vermischt werden und in das aufschäumende Reaktionsgemisch in kurzen Abständen ein dünner Holzstab eingetaucht wird. Die Zeit vom Vermischen der Komponenten bis zu dem Zeitpunkt, bei dem am Stab beim Herausziehen Fäden hängenbleiben, ist die Abbindezeit.

## Beispiel 8 (erfindungsgemäß)

In Beispiel 8 wurde die Form mit einem anfänglichen Injektionsdruck der Einzelkomponenten von 170 bar in die Mischkammer 2 eines in Fig. 3 dargestellten Mischkopfes bei kontinuierlich abnehmendem Injektionsdruck bis zu einem Endwert von 90 bar über einen Zeitraum von 3 s mit Reaktionsgemisch befüllt. Dies entspricht einer Veränderung des Injektionsdrucks von etwa 26,7 bar/s. Das Reaktionsgemisch besaß eine Abbindezeit bei 20 °C von 30 s. Die Abnahme des Injektionsdrucks erfolgte im Rahmen der praktischen Möglichkeiten linear. Insgesamt wurden 4940 g Reaktionsmischung eingetragen. Die Form wurde vollständig ausgeschäumt. Insbesondere waren auch die oberen Kanten scharf ausgebildet und der Schaum war feinporig und lunkerfrei.

## Beispiel 9 (Vergleich)

Hier wurde die Form unter Verwendung desselben Mischkopfes wie im Beispiel 8 bei einem konstanten Injektionsdruck der Einzelkomponenten von 150 bar ebenfalls mit 4940 g Reaktionsmischung befüllt. Das Reaktionsgemisch besaß eine Abbindezeit von 50 s. Nach Beendigung des Ausschäumvorgangs wurde festgestellt, dass am oberen Ende des Dämmelements Material fehlte, welches auf eine unvollständige Ausschäumung zurückzuführen ist. Außerdem war der Schaum optisch erkennbar grobporiger als der Schaum gemäß Beispiel 8.

## Patentansprüche

1. Verfahren zur Herstellung von geschäumten Formkörpern, umfassend die Schritte:

   A) Bereitstellen einer Form und
   B) Einbringen eines schaumbildenden Reaktionsgemisches in die Form, wobei das schaumbildende Reaktionsgemisch unter variablem Injektionsdruck in die Form eingebracht wird,

   **dadurch gekennzeichnet, dass**

das schaumbildende Reaktionsgemisch eine experimentell ermittelte Abbindezeit bei 20°C von $\geq$ 20 s bis $\leq$ 50 s aufweist, und
der variable Injektionsdruck in Schritt B) im zeitlichen Verlauf reduziert wird, und
in Schritt B) die Austrittsgeschwindigkeit des eingebrachten schaumbildenden Reaktionsgemisches $\geq$ in einem Bereich von $\geq$ 1 m/s bis $\leq$ 5 m/s liegt.

2. Verfahren nach Anspruch 1, **dadurch gekennzeichnet, dass** das schaumbildende Reaktionsgemisch in zeitlich veränderlicher Menge in die Form eingebracht wird.

3. Verfahren nach Anspruch 1 oder 2, **dadurch gekennzeichnet, dass** das Verhältnis der Zeitdauer, während der das schaumbildende Reaktionsgemisch in zeitlich veränderlicher Menge in die Form eingebracht wird zu der Liegezeit des schaumbildenden Reaktionsgemischs 0,1 bis 10 beträgt.

4. Verfahren nach einem der vorstehenden Ansprüche, **dadurch gekennzeichnet, dass** die zeitliche Änderung der Eintragsmenge und/ oder des Injektionsdrucks des schaumbildenden Reaktionsgemisches durch eine Veränderung der Leistung eines auf das Reaktionsgemisch einwirkenden Pumpenmotors erfolgt.

5. Verfahren nach einem der vorstehenden Ansprüche, **dadurch gekennzeichnet, dass** das schaumbildende Reaktionsgemisch aus der Reaktion einer ersten und einer zweiten Reaktionskomponente erhalten wird und die erste und zweite Reaktionskomponente jeweils mittels Düsen in eine Mischkammer eingebracht werden.

6. Verfahren nach einem der vorstehenden Ansprüche, **dadurch gekennzeichnet, dass** das schaumbildende Reaktionsgemisch eine Abbindezeit von $\geq$ 25 s bis $\leq$ 50 s aufweist.

7. Verfahren nach einem der vorstehenden Ansprüche, **dadurch gekennzeichnet, dass** die Austrittsgeschwindigkeit des eingebrachten schaumbildenden Reaktionsgemisches in Schritt B) im zeitlichen Verlauf abnimmt.

8. Verfahren nach einem der vorstehenden Ansprüche, **dadurch gekennzeichnet, dass** der Injektionsdruck in Schritt B) im zeitlichen Verlauf weitestgehend linear reduziert wird.

9. Verfahren nach einem der vorstehenden Ansprüche, **dadurch gekennzeichnet,**
**dass** die Form im Querschnitt gesehen ein horizontal angeordnetes Bodenvolumen sowie vertikal angeordnete, mit dem Bodenvolumen kommunizierende Volumina umfasst;
oder dass die Form eine äußere Rohrleitung und eine darin angeordnete innere Rohrleitung umfasst und das schaumbildende Reaktionsgemisch zwischen innerer und äußerer Rohrleitung eingebracht wird;
oder dass die Form zwei voneinander beabstandete Flächenelemente umfasst und das schaumbildende Reaktionsgemisch zwischen diese Flächenelemente eingebracht wird.

10. Verfahren nach einem der vorstehenden Ansprüche, **dadurch gekennzeichnet, dass** das schaumbildende Reaktionsgemisch über einen Mischkopf mit einer Mischkammer eingebracht wird und wobei weiterhin der Abflussquerschnitt der Mischkammer während des Einbringens verändert wird.

11. Verfahren nach einem der vorstehenden Ansprüche, **dadurch gekennzeichnet, dass** das schaumbildende Reaktionsgemisch eine Emulsion umfasst oder daraus besteht, wobei die Emulsion die folgenden Bestandteile enthält:

   (I) eine Isocyanat-reaktive Zusammensetzung **A**, enthaltend eine Polyolmischung **A1** aus wenigstens drei Polyolen **A1a, A1b** und **A1e** als kontinuierliche Phase

und

   (II) wenigstens ein physikalisches Treibmittel **T** als disperse Phase,

wobei gilt:

   (i) **A1a** ist ein Polyetherpolyol mit einer Hydroxylzahl von 15 mg KOH/g bis 550 mg KOHlg und mit einer Funktionalität von 1,5 bis 6,0, erhalten durch Addition eines Epoxids an eine oder mehrere Starterverbindung(en) ausgewählt aus der Gruppe bestehend aus Kohlenhydraten und di- oder höherfunktionellen Alkoholen;
   (ii) **A1b** ist ein Polyetherpolyol mit einer Hydroxylzahl von 100 mg KOH/g bis 550 mg KOH/g und mit einer

17

Funktionalität von 1,5 bis 5,0, erhalten durch Addition eines Epoxids an ein aromatisches Amin;
(iii) **A1e** ist ein Polyesterpolyetherpolyol mit einer Hydroxylzahl von 100 mg KOH/g bis 450 mg KOH/g und mit einer Funktionalität von 1,5 bis 3,5, erhalten durch Addition eines Epoxids an das Veresterungsprodukt eines aromatischen Dicarbonsäurederivats und eines di- oder höherfunktionellen Alkohols.

12. Verfahren nach Anspruch 11, **dadurch gekennzeichnet, dass** das physikalische Treibmittel **T** ausgewählt ist aus wenigstens einem Mitglied der Gruppe bestehend aus Kohlenwasserstoffen, halogenierten Ethern und perfluorierten Kohlenwasserstoffen mit jeweils 1 bis 8 Kohlenstoffatomen.

13. Geschäumter Formkörper, erhältlich nach einem Verfahren gemäß einem der Ansprüche 1 bis 12.

14. Kühlschrank, Gefrierschrank oder Kühl-Gefrierkombination, umfassend einen geschäumten Formkörper nach Anspruch 13, wobei die bereitgestellte Form insbesondere ein Gehäuseteil des Kühlschranks, des Gefrierschranks oder der Kühl-Gefrierkombination ist.

## Claims

1. Method for producing foamed molded bodies comprising the steps of

    A) providing a mold, and
    B) introducing a foam-forming reaction mixture into the mold under variable pressure of injection,

    **characterized in that**
    the foam-forming reaction mixture has an experimentally determined fiber time at 20°C of $\geq$ 20 s to $\leq$ 50 s, and the variable injection pressure is reduced over time in step B), and
    the exit speed of the introduced foam-forming reaction mixture in step B) is $\geq$ in a range of $\geq$ 1 m/s to $\leq$ 5 m/s.

2. Method according to Claim 1, **characterized in that** the foam-forming reaction mixture is introduced into the mold at a temporally variable rate.

3. Method according to Claim 1 or 2, **characterized in that** the ratio of the time in which the form-foaming reaction mixture is introduced into the mold at a temporally variable rate to the cream time of the foam-forming reaction mixture is in the range from 0.1 to 10.

4. Method according to any preceding claim, **characterized in that** the temporal variation of the introduction rate and/or injection pressure of the foam-forming reaction mixture is effected by varying the power output of a pump motor acting on the reaction mixture.

5. Method according to any preceding claim, **characterized in that** the foam-forming reaction mixture is obtained from the reaction of first and second reaction components and the first and second reaction components are each introduced via nozzles into a mixing chamber.

6. Method according to any preceding claim, **characterized in that** the foam-forming reaction mixture has a fiber time of $\geq$ 25 s to $\leq$ 50 s.

7. Method according to any preceding claim, **characterized in that** the exit speed of the introduced foam-forming reaction mixture decreases over time in step B).

8. Method according to any preceding claim, **characterized in that** the injection pressure is reduced over time in a very substantially linear manner in step B).

9. Method according to any preceding claim, **characterized in that** the mold in cross section comprises a horizontally disposed floor volume and also vertically disposed volumes in communication with the floor volume; or in that the mold comprises a pipework line on the outside and a pipework line disposed therein on the inside and in that the foam-forming reaction mixture is introduced between the inside and outside pipework lines;
or in that the mold comprises two mutually spaced-apart areal elements and in that the foam-forming reaction mixture is introduced between these areal elements.

10. Method according to any preceding claim, **characterized in that** the foam-forming reaction mixture is introduced by a mixing head having a mixing chamber and wherein furthermore the outflow cross section of mixing chamber is varied during the introducing.

11. Method according to any preceding claim, **characterized in that** the foam-forming reaction mixture comprises or consists of an emulsion, wherein the emulsion contains the following constituents:

(I) an isocyanate-reactive composition **A** containing a polyol mixture **A1**
of at least three polyols **A1a, A1b** and **A1e** as continuous phase
and
(II) at least one physical blowing agent **T** as disperse phase,
wherein the following limitations apply:

(i) **A1a** is a polyether polyol having a hydroxyl number of 15 mg KOH/g to
550 mg KOH/g and having a functionality of 1.5 to 6.0, obtained by addition reaction of an epoxide onto one or more starter compounds selected from the group consisting of carbohydrates and di- or higher-functional alcohols;
(ii) **A1b** is a polyether polyol having a hydroxyl number of 100 mg KOH/g to
550 mg KOH/g and having a functionality of 1.5 to 5.0, obtained by addition reaction of an epoxide onto an aromatic amine;
(iii) **A1e** is a polyester polyether polyol having a hydroxyl number of 100 mg KOH/g to 450 mg KOH/g and having a functionality of 1.5 to 3.5, obtained by addition reaction of an epoxide onto the esterification product of an aromatic dicarboxylic acid derivative and a di- or more highly functional alcohol.

12. Method according to Claim 11, **characterized in that** the physical blowing agent **T** is selected from at least one member of the group consisting of hydrocarbons, halogenated ethers and perfluorinated hydrocarbons having from 1 to 8 carbon atoms each.

13. Foamed molded body obtainable by a method according to any of Claims 1 to 12.

14. Refrigerator, a freezer or a fridge-freezer combination comprising a foamed molded body according to Claim 13, wherein the provided mold is in particular a housing component of the refrigerator, of the freezer or of the fridge-freezer combination.

## Revendications

1. Procédé de fabrication de corps moulés moussés, comprenant les étapes suivantes :

A) la préparation d'un moule et
B) l'introduction d'un mélange réactionnel formant une mousse dans le moule, le mélange réactionnel formant une mousse étant introduit dans le moule sous une pression d'injection variable,

**caractérisé en ce que**
le mélange réactionnel formant une mousse présente un temps de prise déterminé expérimentalement à 20 °C de $\geq$ 20 s à $\leq$ 50 s, et
la pression d'injection variable à l'étape B) est réduite au cours du temps, et
à l'étape B), la vitesse de sortie du mélange réactionnel formant une mousse introduit se situe dans une plage allant de $\geq$ 1 m/s à $\leq$ 5 m/s.

2. Procédé selon la revendication 1, **caractérisé en ce que** le mélange réactionnel formant une mousse est introduit dans le moule en une quantité variable avec le temps.

3. Procédé selon la revendication 1 ou 2, **caractérisé en ce que** le rapport entre la durée pendant laquelle le mélange réactionnel formant une mousse est introduit dans le moule en une quantité variable avec le temps et le temps de repos du mélange réactionnel formant une mousse est de 0,1 à 10.

**4.** Procédé selon l'une quelconque des revendications précédentes, **caractérisé en ce que** la modification avec le temps de la quantité introduite et/ou de la pression d'injection du mélange réactionnel formant une mousse a lieu par une modification de la puissance d'un moteur de pompe agissant sur le mélange réactionnel.

**5.** Procédé selon l'une quelconque des revendications précédentes, **caractérisé en ce que** le mélange réactionnel formant une mousse est obtenu par la réaction d'un premier et d'un deuxième composant de réaction, et le premier et le deuxième composant de réaction sont chacun introduits dans une chambre de mélange au moyen de buses.

**6.** Procédé selon l'une quelconque des revendications précédentes, **caractérisé en ce que** le mélange réactionnel formant une mousse présente un temps de prise de $\geq 25$ s à $\leq 50$ s.

**7.** Procédé selon l'une quelconque des revendications précédentes, **caractérisé en ce que** la vitesse de sortie du mélange réactionnel formant une mousse introduit à l'étape B) diminue au cours du temps.

**8.** Procédé selon l'une quelconque des revendications précédentes, **caractérisé en ce que** la pression d'injection à l'étape B) est réduite de manière essentiellement linéaire au cours du temps.

**9.** Procédé selon l'une quelconque des revendications précédentes, **caractérisé en ce que** le moule comprend, dans la section, un volume de fond agencé horizontalement et des volumes agencés verticalement, communiquant avec le volume de fond,
ou **en ce que** le moule comprend une conduite tubulaire extérieure et une conduite tubulaire intérieure agencée à l'intérieur de celle-ci, et le mélange réactionnel formant une mousse est introduit entre la conduite tubulaire intérieure et la conduite tubulaire extérieure,
ou **en ce que** le moule comprend deux éléments plats espacés l'un de l'autre et le mélange réactionnel formant une mousse est introduit entre ces éléments plats.

**10.** Procédé selon l'une quelconque des revendications précédentes, **caractérisé en ce que** le mélange réactionnel formant une mousse est introduit par une tête de mélange comprenant une chambre de mélange, la section transversale d'écoulement de la chambre de mélange étant en outre modifiée pendant l'introduction.

**11.** Procédé selon l'une quelconque des revendications précédentes, **caractérisé en ce que** le mélange réactionnel formant une mousse comprend une émulsion ou en est constitué, l'émulsion contenant les constituants suivants :

(I) une composition réactive avec les isocyanates **A**, contenant un mélange de polyols **A1** constitué par au moins trois polyols **A1a**, **A1b** et **A1e** en tant que phase continue, et
(II) au moins un agent gonflant physique **T** en tant que phase dispersée, avec :

(i) **A1a** est un polyéther-polyol ayant un indice hydroxyle de 15 mg de KOH/g à 550 mg de KOH/g et ayant une fonctionnalité de 1,5 à 6,0, obtenu par addition d'un époxyde sur un ou plusieurs composés de départ choisis dans le groupe constitué par les hydrates de carbone et les alcools difonctionnels ou d'une fonctionnalité supérieure ;
(ii) **A1b** est un polyéther-polyol ayant un indice hydroxyle de 100 mg de KOH/g à 550 mg de KOH/g et ayant une fonctionnalité de 1,5 à 5,0, obtenu par addition d'un époxyde sur une amine aromatique ;
(iii) **A1e** est un polyester-polyéther-polyol ayant un indice hydroxyle de 100 mg de KOH/g à 450 mg de KOH/g et ayant une fonctionnalité de 1,5 à 3,5, obtenu par addition d'un époxyde sur le produit d'estérification d'un dérivé d'acide dicarboxylique aromatique et d'un alcool difonctionnel ou d'une fonctionnalité supérieure.

**12.** Procédé selon la revendication 11, **caractérisé en ce que** l'agent gonflant physique **T** est choisi parmi au moins un élément du groupe constitué par les hydrocarbures, les éthers halogénés et les hydrocarbures perfluorés contenant chacun 1 à 8 atomes de carbone.

**13.** Corps moulé moussé, pouvant être obtenu par un procédé selon l'une quelconque des revendications 1 à 12.

**14.** Réfrigérateur, congélateur ou combinaison réfrigérateur-congélateur, comprenant un corps moulé moussé selon la revendication 13, le moule préparé étant notamment une partie de boîtier du réfrigérateur, du congélateur ou de la combinaison réfrigérateur-congélateur.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008040598 A1
- EP 2366525 A1
- EP 2148156 A2
- DE 19917787 A1
- EP 2046861 A1
- US 2764565 A
- US 2761565 A

**In der Beschreibung aufgeführte Nicht-Patentliteratur**

- Emulgiertechnik. R. Behr's Verlag, 2005
- Kunststoff-Handbuch. Carl Hanser Verlag, 1993, 267-354
- Polyurethan Taschenbuch. Carl Hanser Verlag, 2001, 83-102
- Kunststoff-Handbuch. Carl Hanser Verlag, 1993, vol. VII, 267 ff